# EUROPEAN PATENT APPLICATION

(11) **EP 4 787 501 A1**
(43) Date of publication of application: **05.08.2026**
(21) Application number: 25154750.1
(22) Date of filing: 29.01.2025
(51) Int. Cl.: H01M 4/86, H01M 4/88, H01M 4/92, H01M 4/96, H01M 8/10

(54) **SUBSTRATE, METHOD AND MANUFACTURING DEVICE FOR MANUFACTURING THE SUBSTRATE**

(71) Applicant: VON ARDENNE Asset GmbH & Co. KG, 01328 Dresden (DE)
(72) Inventor: Kús, Peter, 13000 Praha (CZ); Hrbek, Tomá, 53803 Rozhovice (CZ); Matolínová, Iva, 25066 Zdiby (CZ); Himmler, Anika, 01328 Dresden (DE); Deus, Carsten, 01328 Dresden (DE); Wemme, Alexander, 01328 Dresden (DE); Niederhausen, Thomas, 01328 Dresden (DE); Busch, Alexander, 01328 Dresden (DE)

(57) **Abstract**

According to various aspects, a substrate (100) comprises: a base layer (102); a plurality of fibrous protrusions (104) projecting from the base layer (102); a coating (106, 116) at least partially covering the protrusions and providing a catalytic surface around the protrusions; wherein, preferably, the plurality of fibrous protrusions (104) comprises deformed protrusions, of which adjacent protrusions are separated from each other by sections (106a, 106b) of the catalytic surface, which contact each other.

## Description

### Field of the Disclosure

Various aspects relate generally to a substrate, an electrochemical cell incorporating such a substrate, and a method and system for manufacturing the substrate in a vacuum environment. Specifically, the disclosure addresses an optimization of the functional properties of the substrate, e.g., by formation and deformation of fibrous protrusions, a coating thereof and various process control variables.

### Background

Electrochemical cells, such as fuel cells, gain increasing attention in the field of water electrolysis and hydrogen generation or for generation of electricity by means of hydrogen or methanol, in particular the type of water electrolyzers with polymer-electrolyte membrane (PEM), e.g., used as proton exchange membrane. PEM are utilizing noble metals in role of reliable catalysts for individual redox reactions, e.g., Patinum (Pt) on the cathode and Iridium (Ir) on the anode. Given that both, Pt and Ir, are precious and expensive, it is industrially desirable to use as little as possible of these metals while maintaining the electrolysis efficiency. Thus, it is a general endeavor, to reduce costs while increasing electrolysis efficiency.

### Summary of the Disclosure

In the following, various examples (e.g., implementation examples) are provided with reference to the aspects described herein.

Example 1 (e.g., a substrate) is configured according to any of the accompanied claims and/or includes: a base layer; a plurality of fibrous protrusions projecting from the base layer; a coating (also referred to as functional coating) at least partially covering the protrusions and providing a catalytic surface around (e.g., on and/or encompassing) the protrusions; wherein, preferably, the plurality of fibrous protrusions include (or are) deformed protrusions, of which, further preferably, one or more (e.g., adjacent) protrusions are covered and/or separated from each other by sections of the catalytic surface (also referred to as catalytic surface sections), which optionally contact each other.

If present, the contacting catalytic surface sections indicate that the fibrous protrusions have been deformed after forming the catalytic surface, e.g., after the fibrous protrusions have been coated. The contacting catalytic surface sections provide additional electrical contacts, thereby shortening the conductive paths, which reduces electrical losses and thereby enhances electrical properties (e.g., efficiency).

Example 2 (e.g., a substrate) is configured according to example 1, wherein a fraction of the plurality of fibrous protrusions are deformed protrusions, wherein the fraction is 10% or more (e.g., 25% or more, e.g., 50% or more, e.g., 75% or more) and/or wherein the fraction is 100% or less (e.g., 95% or less, e.g., 90% or less, e.g., 80% or less, e.g., 70% or less). This further increases the electrical properties.

Example 3 (e.g., a substrate) is configured according to one of examples 1 to 2, wherein the adjacent protrusions include a first protrusion, on which (e.g., a side thereof) a first section of the coating is formed (e.g., providing a first of the catalytic surface sections); wherein the adjacent protrusions include a second protrusion, on which (e.g., a side thereof) a second section of the coating is formed (e.g., providing a second of the catalytic surface sections); wherein a surface section (e.g., the first catalytic surface section) of the first section contacts a surface section (e.g., the second catalytic surface section) of the second section. This further increases the electrical properties.

Example 4 (e.g., a substrate) is configured according to one of examples 1 to 3, wherein the sections of the catalytic surface are disposed between the adjacent protrusions and/or delimit a trench between the adjacent protrusions. For example, the trench may surround a contact area of the sections of the catalytic surface.

Example 5 (e.g., a substrate) is configured according to one of examples 1 to 4, wherein the sections of the catalytic surface contact each other face-to-face.

Example 6 (e.g., a substrate) is configured according to one of examples 1 to 5, wherein the sections of the catalytic surface physically contact (also referred to as touch) each other and/or electrically contact each other.

Example 7 (e.g., a substrate) is configured according to one of examples 1 to 6, wherein the sections of the catalytic surface face contact each other.

Example 8 (e.g., a substrate) is configured according to one of examples 1 to 7, wherein the fibrous protrusions are fibers.

Example 9 (e.g., a substrate) is configured according to one of examples 1 to 8, wherein the sections of the catalytic surface, which contact each other, are distant from the base layer, e.g., separated from the base layer by other section of the catalytic surface, which do not contact each other, and/or by a hollow region of a trench, which separates the adjacent protrusions from each other.

Example 10 (e.g., a substrate) is configured according to one of examples 1 to 9, wherein each of the deformed protrusions is curved, compressed and/or bent.

Example 11 (e.g., a substrate) is configured according to one of examples 1 to 10, wherein the deformed protrusions are provided by and/or compressed by a mechanical pressing process, e.g. applying mechanical pressure to the plurality of fibrous protrusions; wherein preferably the mechanical pressing process includes multiple pressing sequences, which differ from each other in the mechanical pressure and/or degree of collapse.

Example 12 (e.g., a substrate) is configured according to one of examples 1 to 11, wherein the deformed protrusions are provided by (e.g., compressed by) a reeling process (e.g., winding process), e.g., by which the substrate is reeled, preferably under a tension, over a roll (e.g., redirection roll) and/or to a roll. For example, the reeling process may include rolling the substrate over a transport roll and/or winding roll (e.g., to a substrate roll).

Example 13 (e.g., a substrate) is configured according to one of examples 1 to 12, wherein the deformed protrusions are provided by and/or compressed by an assembling process (e.g., including a stacking process), preferably by which an electrochemical cell including the substrate is assembled.

Example 14 (e.g., a substrate) is configured according to one of examples 1 to 13, wherein the deformed protrusions include a first group (e.g., cluster) of deformed protrusions and a second group (e.g., cluster) of deformed protrusions, which preferably differ from each other by one or more of the following: a height provided by the deformed protrusions; a degree of deformation and/or compression; a compactness; a (e.g., volumetric) density of deformed protrusions; a volume of trenches between the deformed protrusions; and/or wherein an area provided by the second group (e.g., cluster) of deformed protrusions is recessed regarding the first group (e.g., cluster) of deformed protrusions.

Example 15 (e.g., a substrate) is configured according to one of examples 1 to 14, wherein the coating and/or the catalyst surface are partially exposed and/or extend into trenches, separating the adjacent and/or deformed protrusions from each other.

Example 16 (e.g., a substrate) is configured according to one of examples 1 to 15, wherein the deformed and/or adjacent protrusions are disposed partially on top of each other.

Example 17 (e.g., a substrate) is configured according to one of examples 1 to 16, wherein the catalytic surface is folded and/or provides a network of interconnections via the sections of the catalytic surface, which contact each other.

Example 18 (e.g., a substrate) is configured according to one of examples 1 to 17, wherein the plurality of fibrous protrusions and/or the deformed protrusions include or are formed from elongated protrusions and/or fibers.

Example 19 (e.g., an electrochemical cell) includes: the substrate of one of examples 1 to 18, two electrodes (e.g., an anode and a cathode), between which the substrate is disposed; preferably one or more fluid distribution plate (e.g., bipolar plate), between which the two electrodes are disposed.

Example 20 (e.g., a method, e.g., for providing the one of examples 1 to 19) includes: forming a coating on a plurality of fibrous protrusions (e.g., fibers) in a vacuum chamber, which project from a base layer, the coating at least partially covering the protrusions and providing a catalytic surface (e.g., around the protrusions); preferably deforming adjacent protrusions of the plurality of fibrous protrusions, preferably by a mechanical deformation process, e.g., such that distant (e.g., spatially separated) sections of the catalytic surface on the adjacent protrusions are brought into contact with each other.

Example 21 (e.g., a method) is configured according to example 20, wherein the mechanical deformation process is configured to apply mechanical pressure to the plurality of fibrous protrusions.

Example 22 (e.g., a method) is configured according to one of examples 20 to 21, wherein the mechanical deformation process includes a mechanical pressing process, e.g., including multiple pressing sequences, which differ from each other in the mechanical pressure and/or degree of resulting deformation of the protrusions. Examples of the pressing sequences may be implemented using a redirection roll, over which the substrate is rolled under tension, or using an assembly process, by which the substrate integrated in a device, e.g., an electrochemical cell.

Example 23 (e.g., a method) is configured according to one of examples 20 to 22, wherein the mechanical deformation process, preferably a first pressing sequence thereof, includes a redirection (e.g., reeling) process, preferably by which the substrate (e.g., a transport thereof) is redirected (e.g., reeled), preferably under tension and/or via a redirection roll (e.g., a transport roll) or to a substrate roll.

Example 24 (e.g., a method) is configured according to one of examples 20 to 23, wherein the mechanical deformation process, preferably a second pressing sequence thereof, includes an assembling process, preferably by which an electrochemical cell including the substrate is assembled.

Example 25 (e.g., a method) is configured according to one of examples 20 to 24, further including: forming the plurality of protrusions, preferably by a subtractive process (preferably including a plasma) to which the substrate is exposed and/or by which the substrate is sputtered, e.g., via magnetron sputtering (also referred to as magnetic field enhanced sputtering). For example, the subtractive process may be a subtractive-additive process, by which a masking material is disposed on the substrate, which separates multiple disjunct sections of the substrate from the subtractive process.

Example 26 (e.g., a vacuum manufacturing system, e.g., for providing the substrate and/or for performing the method of one of the preceding examples) includes: a vacuum chamber; a transport device configured to transport a substrate in the vacuum chamber, the substrate, preferably, including a base layer and a plurality of fibrous protrusions (e.g., fibers), which project from the base layer; a coating device disposed in the vacuum chamber and/or configured for forming a coating (also referred to as coating process) on a plurality of fibrous protrusions (e.g., fibers), the coating , preferably, at least partially covering the protrusions and/or providing a catalytic surface (e.g., around the protrusions); preferably a deformation device configured for deforming (e.g., adjacent) protrusions of the plurality of fibrous protrusions, such that sections of the catalytic surface, which are spatially separated from each other and/or which separate adjacent protrusions from each other, are brought in contact with each other.

Example 27 (e.g., a vacuum manufacturing system) is configured according to example 26, the deformation device including a substrate reeling device (e.g., of the transport device) configured for reeling the substrate, preferably under tension, over a transport roll or to a substrate roll.

Example 28 (e.g., a vacuum manufacturing system) is configured according to one of examples 26 to 27, wherein the transport device includes a substrate carrier, wherein the substrate carrier preferably includes: a frame configured to transfer tensile strain to the substrate for spanning the substrate; and/or a temperature control device (e.g., cooling device) configured to deplete thermal energy from the substrate and/or supply thermal energy to the substrate.

Example 29 (e.g., a vacuum manufacturing system) is configured according to one of examples 26 to 28, further including: a (e.g., subtractive) processing device (e.g., in the vacuum chamber), preferably a sputtering device, configured to provide a (e.g., subtractive) process (e.g., a subtractive-additive process) for forming the plurality of protrusions and/or to provide a (e.g., subtractive) process (preferably including a plasma), to which the substrate is exposed and/or by which the substrate is (e.g., partially) sputtered. Preferably, the subtractive process uses plasma and/or includes plasma etching.

Example 30 (e.g., a vacuum manufacturing system) is configured according to example 29, further including an abatement system configured to deplete a gaseous result of the subtractive process. Examples of the gaseous result include Carbon-based gas, e.g., Carbon (C) fluoride (CFx), Carbon oxid (e.g., COx), Carbonyl fluoride (e.g., CFxOy), and/or Sulfur-based gas, e.g., Sulfur oxide (e.g., SOx), and Sulfur-based acid (e.g., HSyOx).

Example 31 (e.g., a vacuum manufacturing system) is configured according to example 30, wherein the abatement system is configured to neutralize and/or remove one or more chemical components from the gaseous result of the subtractive process. Examples of the chemical components include ions gaseous product.

Example 32 is configured according to one of examples 1 to 31, wherein a plasma, to which the substrate is preferably exposed and/or by which the substrate is at least partially etched (e.g., by reactive etching, by dry etching, by vaporization and/or by sputter etching), is provided in and/or from an atmospheric composition (e.g., provided by a working gas) formed from (e.g., pure) inert gas (e.g., preferably Argon, but also possible one or more of: neon, helium, krypton, xenon, radon) and/or from a (e.g., pure) reactive gas (for example Oxygen); and/or wherein the substrate (and/or at least the plasma) is exposed to a partial pressure of Oxygen in the range from 10⁻⁷ mbar to 10 mbar.

Example 33 is configured according to one of examples 31 to 32, , wherein a plasma, to which the substrate is preferably exposed and/or by which the substrate is at least partially etched (e.g., by reactive etching, by dry etching, by vaporization and/or by sputter etching), is supplied by Argon and/or Oxygen and/or is formed in an atmospheric composition (also referred to as working atmosphere) including (e.g., composed from) Argon and/or Oxygen.

Example 34 is configured according to example 33, wherein the Argon and the Oxygen are (e.g., mixed and/or supplied to the plasma) in a ratio of n atoms Oxygen per 1 atom Argon or more; and/or wherein the plasma includes Argon and Oxygen (e.g., mixed and/or supplied to the plasma) in a ratio of 1 atom Oxygen per n≥3 atoms Argon or more.

Example 35 is configured according to example 34, wherein n≥3, e.g., n≥4, e.g., n≥5, n≥10, e.g., n≥20, e.g., n≥50, e.g., n≥10E2, e.g., n≥10E3, e.g., n≥10E6 (e.g., providing almost pure Oxygen). The expression "10Ex" refers to the number 10 to the power of x (also expressed as 10^{x}).

Example 36 is configured according to example 34 or 35, wherein n is in the range from n=3/2 to n=4/3; and/or wherein n the range is from n=4 to infinity.

Example 37 is configured according to one of examples 1 to 36, wherein a (e.g., Iridium-including) catalytic layer of the coating (e.g., providing the catalytic surface) includes or is formed from a precious metal (e.g., Iridium) and/or an oxide thereof (e.g., Iridium oxide) and/or wherein the precious metal (e.g., Iridium) and/or the oxide thereof (e.g., Iridium oxide) provide the catalytic surface. Examples for the precious metal include a platinum group metal (e.g., one of Ruthenium, Rhodium, Palladium, Osmium, Iridium, and Platinum), Gold.

Example 38 is configured according to example 37, wherein the precious metal (e.g., Iridium) and/or the catalytic layer is partially oxidized and/or exposed to Oxygen, e.g., when or after forming the catalytic layer.

Example 39 is configured according to one of examples 1 to 38, wherein the plurality of fibrous protrusions (e.g., by etching and/or by a plasma) and the coating are formed in (e.g., two) separate vacuum regions, which differ from each other in an atmospheric chemical composition (e.g., Oxygen ratio and/or partial pressure) provided therein and/or which are separated from each other by a chamber wall (also referred to as gas separation wall).

Example 40 is configured according to one of examples 1 to 39, wherein the coating includes a first material (e.g., providing masking caps, e.g., particles) formed in a first vacuum region and a second material (e.g., a catalyst) formed in a second vacuum region, wherein the first vacuum region and second vacuum region differ from each other in one or more atmospheric parameters (e.g., parameters of an atmosphere) provided therein and/or are separated from each other by a gas separation barrier (e.g., provided by a chamber wall). Examples for the atmospheric parameters include: a chemical composition of the atmosphere, an Oxygen ratio of the atmosphere, a temperature of the atmosphere, a total pressure of the atmosphere, and/or partial pressure (e.g., ratio) of the atmosphere provided therein. In an exemplarily implementation of Example 39, the first vacuum region and the second vacuum region are exposed to the same chemical composition of the atmosphere (e.g., composed of Oxygen) provided therein, but differ one or more other atmospheric parameter.

Example 41 is configured according to example 40, wherein the two vacuum regions include a first vacuum region, in which the catalytic surface is formed and/or to which (e.g., molecular) Oxygen is supplied.

Example 42 is configured according to example 40 or 41, wherein the two vacuum regions include a second vacuum region, in which the plurality of fibrous protrusions are formed and/or to which Argon and/or molecular Oxygen are supplied, preferably in a ratio of 1 molecule Oxygen per n atoms Argon or more, wherein n≥3, e.g., n≥4, n≥4, n≥10, e.g., n≥20, e.g., n≥50, , e.g., n≥100.

Example 43 is configured according to one of examples 1 to 42, wherein the plurality of protrusions is formed using plasma, by which the substrate is coated (e.g., with a Cerium containing material, e.g., an oxide or fluoride thereof) and sputtered simultaneously.

Example 44 is configured according to example 43, wherein the substrate is coated by the plasma at a first rate and/or wherein the substrate is (e.g., erosively) sputtered, e.g., by the plasma and/or ions (e.g., origination from the plasma) at a second rate; wherein preferably the second rate is more than the first rate.

Example 45 is configured according to one of examples 1 to 44, wherein the plurality of protrusions is formed and/or the substrate is exposed to (e.g., coated using): a target, which is preferably sputtered by the plasma and/or preferably includes Cerium, e.g., includes a chemical compound of Cerium (e.g., an oxide or fluoride thereof) or is formed therefrom.

Example 46 is configured according to example 45, wherein a distance of the target from the substrate (or the transport path) is in the range from about 1 cm to 10 cm.

Example 47 is configured according to one of examples 1 to 46, wherein the plurality of protrusions is formed using a plasma, by which an area of a target and/or the substrate is exposed, wherein a ratio of an electrical power, by which the plasma is supplied and/or which is consumed by the plasma, and the area is in the range from 0.01 W/cm² to 10 W/cm².

Example 48 is configured according to one of examples 1 to 47, wherein the plurality of protrusions is formed using a plasma, to which a target and/or the substrate is exposed, wherein an electrical power, by which the plasma is supplied and/or which is consumed by the plasma, is in the range from 1 Kilowatt (kW) to100 kW.

Example 49 is configured according to one of examples 1 to 48, wherein the plurality of protrusions is formed using a plasma, to which surface of a substrate is exposed, when the substrate is transported along a direction, wherein the surface includes an geometric extension (e.g., width), which is perpendicular to the direction; wherein a ratio of an electrical power, by which the plasma is supplied and/or which is consumed by the plasma, to the extension is in the range from 1 kW per Meter to100 kW per Meter.

Example 50 (e.g., directed to control a control variable representing plasma power normalized to the substrate velocity) is configured according to one of examples 1 to 49, wherein the plurality of protrusions is formed using a plasma, to which the substrate is exposed, when the substrate is transported (e.g., past the plasma) with a transport velocity, wherein a ratio of: an electrical power, by which the plasma is supplied and/or which is consumed by the plasma, to the transport velocity (also referred to as substrate velocity) is in the range from about 50 Watt per (Centimeter per Second) (Ws/cm) to 5 kWs/cm, e.g., from 0.1 kWs/cm to 1 kWs/cm, e.g., about 402 (W)/(cm s⁻¹); an area density of the electrical power, to which the substrate is exposed, to the transport velocity is in the range from about 0.1 Watt per Square centimeter an per (Centimeter per Second) (W cm⁻²)/(cm s⁻¹) to 50 (W cm⁻²)/(cm s⁻¹), e.g., from 1 (W cm⁻²)/(cm s⁻¹) to 5 (W cm⁻²)/(cm s⁻¹), e.g., about 2.5 (W cm⁻²)/ (cm s⁻¹); a product of the area density of the electrical power and a distance of transport (also referred to as effective length, or "Wirklange"), along which the substrate is exposed to the plasma, to the transport velocity is in the range from 0.01 Watt per Square centimeter an per Centimeter (W cm⁻²)/(cm) to 5 (W cm⁻²)/(cm), e.g., 0.1 (W cm⁻²)/(cm) to 1 (W cm⁻²)/(cm), e.g., about 0.31 (W cm⁻²)/(cm); wherein, preferably, the distance of transport includes multiple transport distance segments (also referred to as "zone length"), which are spatially separated from each other and along each of with, the substrate is exposed to a plasma (e.g., a zone thereof).

Example 51 (e.g., directed to control a control variable representing plasma power times exposure time) is configured in accordance with one of examples 1 to 50, wherein the plurality of protrusions is formed using a plasma, to which the substrate is exposed for an exposure time, when the substrate is transported (e.g., past the plasma), wherein a product of: an electrical power, by which the plasma is supplied and/or which is consumed by the plasma, and the exposure time is in the range from 1 Second (s) to 600 s; an area density of the electrical power, to which the substrate is exposed, and the exposure time is in the range from 0.1 Watt per Square centimeter times Minutes (W·cm⁻²·min) to 100 W·cm⁻²·min, e.g., more than 1 W·cm⁻²·min and/or less than 10 W·cm⁻²·min.

Example 52 (e.g., directed to control a control variable representing a power density normalized to the substrate velocity) is configured in accordance with one of examples 1 to 51, wherein the plurality of protrusions is formed using a plasma, to which a surface area of the substrate is exposed, when the substrate is transported (e.g., past the plasma and/or with a transport velocity), wherein a ratio of: an electrical power, by which the plasma is supplied and/or which is consumed by the plasma, per surface area of the substrate, which is exposed to the plasma, to the transport velocity is in the range from 0.01 W cm⁻²/(cm s⁻¹) to 500 W cm⁻²/(cm s⁻¹), e.g., less than 50 W cm⁻²/(cm s⁻¹), e.g., 0.1 W cm⁻²/(cm s⁻¹) to 100 W cm⁻²/(cm s⁻¹), e.g., less than 50 W cm⁻²/(cm s⁻¹); a product of the electrical power, by which the plasma is supplied and/or which is consumed by the plasma, per surface area of the substrate, which is exposed to the plasma, and a distance of transport, along which the substrate is exposed to the plasma, to the transport velocity is in the range from 0.1 W cm⁻²/(cm s⁻¹) to 3000 W cm⁻²/(cm s⁻¹), e.g., 0.3 W cm⁻²/(cm s⁻¹) to 1000 W cm⁻²/(cm s⁻¹), e.g., less than 500 W cm⁻²/(cm s⁻¹); wherein, preferably, the distance of transport includes multiple transport distance segments, which are spatially separated from each other and along each of with, the substrate is exposed to the plasma (e.g., a zone thereof). As example, the transport distance may cover multiple plasma zones.

Example 53 is configured according to one of examples 1 to 52, wherein the plurality of protrusions is formed using a plasma, to which a surface area of the substrate is exposed for an exposure time, wherein a product of an electrical power, by which the plasma is supplied and/or which is consumed by the plasma, per surface area of the substrate, which is exposed to the plasma, and the exposure time is in the range from 0.005 W·cm⁻²·min (Watt per square centimeter times minutes) to 500 W·cm⁻²·min, e.g., 0.01 W·cm⁻²·min to 100 W·cm⁻²·min, e.g., 0.03 W·cm⁻²·min to 33 W·cm⁻²·min.

Example 54 is configured according to one of examples 1 to 53, wherein the substrate is provided as sheet and/or is plate-shaped.

Example 55 is configured according to one of examples 1 to 54, wherein the substrate is disposed in or transported by a substrate carrier, wherein the substrate carrier preferably includes a frame configured to transfer tensile strain to the substrate for spanning the substrate.

Example 56 is configured according to example 55, wherein the substrate carrier includes a temperature control device (e.g., cooling device) configured to deplete thermal energy from and/or supply thermal energy to the substrate (e.g., via heat radiation and/or a cooling fluid) and/or which includes a convex surface facing (e.g., being in contact) the substrate.

Example 57 is configured according to one of examples 1 tow 56, wherein the plurality of protrusions is formed using a plasma, to which a Cerium-based material (e.g., compound), e.g., target, is exposed and/or by which a Cerium-based compound (e.g., Cerium oxide) is sputtered, wherein a ratio of Cerium atoms and Oxygen atoms of the Cerium oxide is less than 2 (also referred to as sub-stoichiometric Cerium oxide or incompletely oxidized Cerium oxide) or equal to 2 (also referred to as stochiometric Cerium oxide or completely oxidized Cerium oxide).

Stochiometric Cerium oxide in the coating may, in sone aspects, indicate that the subtractive process was conducted with a high Oxygen supply, e.g., in pure Oxygen. Sub-stoichiometric Cerium oxide in the coating may, in sone aspects, indicate that the subtractive process was conducted with a low Oxygen supply, e.g., in pure Argon. The references herein made to Cerium oxide may be understood as not be limiting, and may apply in analogy to any other Cerium-based compound, e.g., compound of Cerium (also referred to as Cerium compound), e.g., Cerium fluoride (e.g., CeFs).

Example 58 is configured according to one of examples 1 to 57, wherein the coating includes a (e.g., stochiometric or sub-stochiometric) Cerium-based compound (e.g., islands and/or particles including a Cerium-based compound), e.g., wherein: an atomic fraction of Cerium of the Cerium-based compound is less than 1, e.g., in the range between 1/3 (e.g., ½) and 0.9; and/or wherein: a ratio of compound-forming atoms (e.g., non-metal atoms) and Cerium atoms of the Cerium-based compound is more than 1, e.g., less than (or equal to) 2 (e.g., for Cerium Oxide) and/or wherein the Cerium-based compound is sub-stoichiometric (or stochiometric). Examples for the compound-forming atoms (e.g., non-metal atoms) include: oxygen, nitrogen and fluorine.

Example 59 is configured according to one of examples 1 to 58, wherein a reflectivity (e.g., averaged over the visible spectrum, e.g., within the range between 380 nm to 780 nm) of the substrate is in the range from 0.1% to 20 % (e.g., more than 1% and/or less than 10%) and/or reduced by forming the coating by more than 1% (e.g., 5%, e.g., 10%, e.g., 25 %, e.g., 50%). A low reflectivity of the substrate may indicate a suitable configuration of the fibrous protrusions, e.g., high depth of the trenches and/or high number of fibrous protrusions per substrate area (also referred to as area density of fibrous protrusions). The area density of fibrous protrusions (e.g., expressed as fibrous protrusions per area) may be invariant to the deformation process, by which the fibrous protrusions are deformed, and which increase the volumetric density of the fibrous protrusions (e.g., expressed as fibrous protrusions per volume).

Example 60 is configured according to one of examples 1 to 59, wherein a reflectivity (e.g., averaged over the visible spectrum, e.g., within the range between 380 nm to 780 nm) of the substrate is decreased by forming the coating and/or by forming the plurality of protrusions.

Example 61 is configured according to one of examples 1 to 60, wherein a transmissivity of the substrate (e.g., including the plurality of protrusions) (e.g., averaged over spectral range between 192 nm to 400 nm) of the substrate is in the range from 60% to 80 % (e.g., more than 70% and/or less than 78%) and/or reduced by forming the plurality of protrusions by more than 1% (e.g., 5%, e.g., 10%, e.g., 25 %, e.g., 50%).. A low transmissivity of the substrate after forming the protrusions may indicate a suitable configuration of the fibrous protrusions, e.g., high depth of the trenches and/or high number of fibrous protrusions per substrate area (also referred to as area density of fibrous protrusions). The area density of fibrous protrusions (e.g., expressed as fibrous protrusions per area) may be invariant to the deformation process, by which the fibrous protrusions are deformed, and which increase the volumetric density of the fibrous protrusions (e.g., expressed as fibrous protrusions per volume).

Example 62 is configured according to one of examples 1 to 61, wherein a ratio of diffuse reflection to specular reflection of the substrate is changed (e.g., increased) by forming the coating and/or by forming the plurality of protrusions. For example, the substrate may be predominantly specular reflective before forming the fibrous protrusions and predominantly diffuse reflective after forming the fibrous protrusions. A high ratio of diffuse reflection to specular reflection may indicate a suitable configuration of the fibrous protrusions, e.g., high depth of the trenches and/or high number of fibrous protrusions per substrate area.

Example 63 is configured according to one of examples 1 to 62, wherein the plurality of protrusions is formed using a plasma, by which the substrate is sputtered, when the substrate is coupled to a temperature control device (e.g., cooling device) configured to deplete thermal energy from and/or supply thermal energy to the substrate and/or which includes a convex surface facing (e.g., being in contact) the substrate, and/or when thermal energy is depleted from the substrate.

Example 64 is configured according to one of examples 1 to 63, wherein the plurality of fibrous protrusions (e.g., fibers) include a first set of fibrous protrusions on a first side of the substrate and a second set of fibrous protrusions on a second side of the substrate being opposite the first side.

Example 65 is configured according to one of examples 1 to 64, wherein the plurality of fibrous protrusions (e.g., fibers) include a first set of fibrous protrusions and a second set of fibrous protrusions, between which the base layer of the substrate is disposed.

Example 66 is configured according to one of examples 1 to 65, wherein the coating includes a first coating section on a first side of the substrate and a second coating section on a second side of the substrate being opposite the first side; and/or wherein the coating includes a first coating section and a second coating section, between which the base layer is disposed.

Example 67 is configured according to example 66, wherein the second coating section includes Platinum, preferably more Platinum than the first coating section and/or being formed from Platinum.

Example 68 is configured according to one of examples 65 to 67, wherein the first coating section includes a precious metal (e.g., Iridium), preferably more precious metal (e.g., Iridium) than the second coating section and/or being formed from precious metal (e.g., Iridium).

Example 69 is configured according to one of examples 65 to 68, wherein the first coating section is formed on a substrate section of the substrate, when the substrate section is in contact with a first transport roll (e.g., of the transport device), wherein preferably the first transport roll includes a temperature control device ((also referred to as first drum temperature control device, e.g., cooling device) configured to deplete thermal energy from and/or supply thermal energy to the substrate section.

Example 70 is configured according to one of examples 65 to 69, wherein the second coating section is formed on the substrate section of the substrate, when the substrate section is in contact with a second transport drum (e.g., of the transport device), wherein preferably the second transport drum includes a second drum (also referred to as roll) temperature control (e.g., cooling) device configured to deplete thermal energy from and/or supply thermal energy to the substrate section.

Example 71 is configured according to one of examples 1 to 70, wherein the plurality of protrusions is formed using a subtractive process, preferably including plasma, to which the substrate is exposed and/or by which the substrate is sputtered.

Example 72 is configured according to example 71, wherein a gaseous result of the subtractive process is depleted from the subtractive process by an abatement system.

Example 73 (e.g., a vacuum manufacturing system) is configured according to example 72, wherein the abatement system is configured to neutralize and/or remove one or more chemical components from the gaseous result of the subtractive process.

Example 74 is configured according to one of examples 1 to 73, wherein the catalyst surface is provided by one or more precious metals (e.g., Iridium and/or Platinum).

Example 75 is configured according to one of examples 1 to 74, wherein the catalytic surface is formed using a sputtering process and/or using a plasma, to which a catalyst (e.g., Iridium and/or Platinum) is exposed and/or by which the catalyst is sputtered.

Example 76 is configured according to one of examples 1 to 75, wherein the catalytic surface is formed using a chemical vapor deposition, preferably enhanced by a plasma (e.g., PECVD) and/or providing an (e.g., spatial) atomic layer deposition, by which a catalyst (e.g., Iridium and/or Platinum) is provided as educt and/or as component of a precursor supplied to the chemical vapor deposition. Chemical vapor deposition may allow a deeper penetration of the catalyst into the trenches.

Example 77 is configured according to one of examples 1 to 76, wherein the plurality of protrusions is formed using a plasma, to which a target and/or the substrate are exposed, wherein the target is preferably sputtered by the plasma and/or includes a Cerium-based compound, e.g., Cerium oxide.

Example 78 is configured according to one of examples 1 to 77, wherein the plurality of fibrous protrusions is monolithically coupled to the base layer and/or includes a chemical composition of the base layer

Example 79 is configured according to one of examples 1 to 78, the substrate providing a membrane, preferably a polymer-electrolyte membrane and/or an ion exchange membrane, preferably a proton exchange membrane.

Example 80 is configured according to one of examples 1 to 79, further including a network of interconnected trenches, separating the protrusions from each other, wherein the trenches delimit the base layer and/or delimit the coating.

Example 81 is configured according to one of examples 1 to 80, wherein the coating includes a catalyst providing the catalytic surface; wherein preferably the coating includes a catalytic layer including or being formed from the catalyst.

Example 82 is configured according to one of examples 1 to 81, wherein the catalyst includes or is formed from one or more precious metals (e.g., Iridium and/or Platinum).

Example 83 is configured according to one of examples 1 to 82, wherein the coating and/or the catalyst surface are partially exposed and/or extend into trenches, separating the protrusions from each other.

Example 84 is configured according to one of examples 1 to 83, wherein the coating includes a plurality of (e.g., particle-shaped or island-shaped) protection caps, of which each cap is disposed on a tip of a protrusion of the plurality of protrusion and/or disposed between the catalytic surface (or catalytic layer) and the protrusion (e.g., the tip thereof).

Example 85 is configured according to example 84, wherein the caps include or are formed from a ceramic (e.g., including oxide and/or fluoride and/or nitride) and/or wherein the caps include a metal (e.g., Cerium) and/or a compound thereof.

Example 86 is configured according to one of examples 1 to 85, wherein the coating is in physically contact with the plurality of protrusions.

Example 87 is configured according to one of examples 1 to 86, wherein the plurality of protrusions and/or the base layer include (e.g., are formed from) a polymer (e.g., an organic polymer) and/or an ionomer material (e.g., ionomer polymer). Examples of the polymer include: fluorine-containing ionomer, non- fluorine-containing ionomer: Examples of the ionomer polymer include: Perfluorosulfonic acid, perfluorinated copolymer (e.g., Nafion), Aquivion, 3M ionomer. This enhances ion transport capability of the substrate. Some examples of the polymer may also be inorganic.

Example 88 is configured according to one of examples 1 to 87, wherein the substrate is provided as (e.g., from or to) a roll (also referred to as substrate roll) including multiple windings of the substrate, wherein the roll preferably includes an interleaf, which is disposed between adjacent windings of the substrate (e.g., separating them from each other).

Example 89 is configured according to one of examples 1 to 88, wherein the substrate is processed by a reeling process, by which the substrate is reeled to a roll (also referred to as substrate roll) including multiple windings of the substrate, wherein the roll includes an interleaf, which is disposed between adjacent windings of the substrate (e.g., separating them from each other) and is in physical contact with the catalyst surface or with protection caps (e.g., including a Cerium-based compound, e.g., Cerium oxide), of which each cap is disposed on a tip of a protrusion of the plurality of protrusions. Each cap may, for example, be island-shaped or particle-shaped.

Example 90 is configured according to one of examples 1 to 89, wherein the mechanical deformation process includes a mechanical pressing process configured to press an interleaf onto the substrate, preferably when reeling the substrate to a roll and/or configured to deform the protrusions by pressing the interleaf onto the substrate.

Example 91 is configured according to one of examples 1 to 90, wherein the coating includes multiple catalysts (e.g., Iridium and Platinum), which preferably are mixed with each other or layered over each other; and/or wherein preferably the catalytic surface is provided by one or more of the multiple catalysts, e.g., a first catalyst (e.g., Iridium) of the multiple catalysts and/or a second catalyst (e.g., Platinum) of the multiple catalysts.

Example 92 is configured according to one of examples 1 to 91, wherein the coating includes a stack of multiple layers including a first (catalyst) layer including of made from a first catalyst (e.g., Iridium and/or of the multiple catalysts) and a second (catalyst) layer including of made from a second catalyst (e.g., Platinum and/or of the multiple catalysts), wherein preferably the first layer and/or the second layer provide the catalytic surface.

Example 93 is configured according to example 92, wherein the multiple layers include a third layer disposed between the first layer and the second layer, wherein the third layer is dielectric, and/or includes (e.g., is made from) a polymer and/or separates the first layer and the second layer from each other.

Example 94 is configured according to one of examples 1 to 93, wherein the coating includes a first catalyst and a second catalyst different from the first catalyst, wherein the first catalyst is embedded in the second catalyst (e.g., in a layer made from the second catalyst) and/or wherein the first catalyst (e.g., a layer made from the first catalyst) contacts the second catalyst (e.g., a layer made from the second catalyst).

Example 95 is configured according to one of examples 1 to 94, wherein each of the sections of the catalytic surface, which contact each other, is delimited by another section of the catalytic surface (e.g., surrounding the section along a closed path), which is exposed, e.g., to a trench between the adjacent fibrous protrusions.

Example 96 is configured according to one of examples 1 to 95, wherein each of the sections of the catalytic surface, which contact each other, is delimited by a region of a trench (e.g., surrounding the section along a closed path) between the adjacent fibrous protrusions.

Example 97 is configured according to one of examples 1 to 96, wherein each of the sections of the catalytic surface, which contact each other, is delimited by a hollow region (e.g., surrounding the section along a closed path) between the adjacent fibrous protrusions. For example, the hollow region is provided by a trench.

Example 98 is configured according to one of examples 1 to 97, wherein the substrate further includes a hollow region disposed between the base layer and the sections of the catalytic surface, which contact each other. For example, the hollow region is provided by a trench.

Example 99 is configured according to one of examples 1 to 98, wherein the substrate further includes a hollow region delimiting the base layer and the sections of the catalytic surface, which contact each other. For example, the hollow region is provided by a trench.

Example 100 is configured according to one of examples 1 to 99, wherein the substrate (e.g., of the method and/or of the manufacturing device) is a band-like substrate.

Example 101 is configured according to one of examples 1 to 100, wherein the sections of the catalytic surface, which contact each other, form a surface-on-surface interface.

Example 102 is configured according to one of examples 1 to 101, wherein the sections of the catalytic surface, which contact each other, form a surface-on-surface (e.g., engagement) interface.

Example 103 is configured according to one of examples 1 to 102, wherein the sections of the catalytic surface, which contact each other, form a two-dimensional contact or point-like contact. The term "point-like contact" may be understood as type of contact, which may be point-like, not necessarily being dimension-less. The point contact may, for example, be delimited (e.g., surrounded) by a hollow region. The point-like contact may be obtained, when two convex surfaces are brought into contact with each other. The term "two-dimensional contact" may be understood as, for example, being delimited (e.g., surrounded) by a hollow region. The two-dimensional contact may be obtained, when two surfaces are aligned to each other and brought into contact with each other

Example 104 is configured according to one of examples 1 to 103, wherein the coating (e.g., the catalyst thereon) has a higher electrical conductivity than the fibrous protrusions and/or than the base layer.

Example 105 is configured according to one of examples 1 to 104, wherein the coating is electrically conductive and/or partially made from a metal, e.g., precious metal, noble metal.

Example 106 (e.g., a substrate) is configured according to one of examples 1 to 105, wherein each of the sections of the catalytic surface, which contact each other, is convex.

Example 107 (e.g., a substrate) is configured according to one of examples 1 to 106, wherein each of the sections of the catalytic surface, which contact each other, includes a contact area, by which the contact is provided and a perimeter surrounding the contact area.

Example 108 (e.g., a substrate) is configured according to one of examples 1 to 107, wherein each of the sections of the catalytic surface, which contact each other, is a simply connected section (e.g., free of holes).

Example 109 is configured according to one of examples 1 to 108, wherein the target is tubular and/or mounted rotatably, e.g., rotating, when being exposed to the plasma. This increases the manufacturing efficiency.

Example 110 (e.g., the manufacturing system) is configured according to one of examples 1 to 109, further including a magnet system disposed in the target and configured to generate a magnetic field, which permeates through the target and/or to which the plasma is exposed. This increased manufacturing efficiency.

Example 111 is configured according to one of examples 1 to 110, wherein the plurality of fibrous protrusions includes (e.g., one or more clusters of) deformed protrusions.

Example 112 is configured according to example 111, wherein the deformed protrusions include (e.g., one or more pairs of) adjacent protrusions (e.g., per 5 or 10 protrusions), which are covered by sections of the catalytic surface (also referred to as catalytic surface sections).

Example 113 is configured according to example 112, wherein the sections of the catalytic surface contact each other.

Example 114 is configured according to example 113, wherein the sections of the catalytic surface, which contact each other, are spatially separated (e.g., distant from) the base layer and/or are spatially separated (e.g., distant from) the tips of the adjacent protrusions.

Example 115 is configured according to one of examples 1 to 114, wherein the Cerium-based material (also referred to as Cerium material) is a Cerium-based compound (e.g., a Cerium compound) and/or includes oxide and/or fluoride.

Example 116 is configured according to one of examples 1 to 115, wherein the Cerium-based compound (e.g., Cerium compound) includes oxide (O) and/or fluoride (F), e.g., wherein the Cerium compound is Cerium fluoride (e.g., CeF3) or Cerium oxide.

Example 117 is configured according to one of examples 1 to 116, wherein the Cerium compound includes Cerium oxide and/or Cerium fluoride.

Example 118 is configured according to one of examples 1 to 117, wherein the Cerium-based compound includes Cerium oxide, Cerium fluoride and/or a mixture thereof.

Example 119 is configured according to one of examples 1 to 118, wherein the coating includes a layer of CeOx and a layer of a precious metal (e.g., Iridium).

Example 120 is configured according to one of examples 1 to 119, wherein forming the coating further comprises supplying thermal energy to or depleting thermal energy from the substrate using a temperature control device, e.g., such that a (e.g., absolute) temperature of the substrate is in the range from 50% (e.g., 70%) to 99% (e.g., 95%) of a glass transition temperature of the substrate (e.g., in Kelvin). The absolute temperature may be provided on Kelvin scale. Alternatively or additionally, the temperature of the substrate more than -30°C and/or less than 120°C (e.g., 105°C), e.g., in the range of about 80°C to 105°C.

Example 121 is configured according to one of examples 1 to 120, the substrate temperature control device is configured to provide (e.g., hold, e.g., stabilize) a (e.g., absolute) temperature of the substrate in the range from 50% (e.g., 70%) to 99% (e.g., 95%) of a (e.g., absolute) glass transition temperature of the substrate, e.g., when the substrate is exposed to a plasma and/or coated and/or when the protrusion forming process is started.

Example 122 is configured according to one of examples 1 to 121, wherein the Oxygen is an Oxygen gas (e.g., composed of Oxygen molecules and/or atoms and/or ions).

Example 123 is configured according to one of examples 1 to 122, wherein the Oxygen includes or is composed of molecular Oxygen.

Example 124 is configured according to one of examples 1 to 123, wherein the plurality of protrusions is formed using plasma, by which the substrate is coated under influence of a subtractive process (e.g. a sputter process and/or etching process).

Example 125 is configured according to one of examples 1 to 124, wherein the substrate is coated via the process of plasma deposition by material consisting of elements of a target at a first rate and/or wherein the substrate is erosively sputtered/eroded by ions at a second rate.

Example 126 is configured according to one of examples 1 to 125, wherein the precious metal includes a platinum group metal (e.g., one of Ruthenium, Rhodium, Palladium, Osmium, Iridium, and Platinum), Gold.

Example 127 is configured according to one of examples 1 to 126, wherein the precious metal includes Iridium and/or Platinum or is formed from Iridium or Platinum.

Example 128 is configured according to one of examples 1 to 127, wherein the glass transition temperature of the substrate is below 200°C (e.g., below 150°C). An example of the glass transition temperature, e.g., in case of Nation, may be 130°C.

Example 129 is configured according to one of examples 1 to 128, wherein the coating (e.g., at least the catalyst layer) is formed on the plurality of fibrous protrusions, of which more than 50% (e.g., 75% or 99%) are undeformed (e.g., as formed) and/or less deformed than the deformed protrusions), e.g., which are undeformed and/or less deformed than the deformed protrusions. This enhances the process result.

Example 130 is configured according to one of examples 1 to 129, wherein the coating is formed on the result of forming the plurality of fibrous protrusions, e.g., without modifying (e.g., deforming) the plurality of fibrous protrusions or touching the plurality of fibrous protrusions.

Example 131 is configured according to one of examples 1 to 130, wherein, forming the plurality of fibrous protrusions and forming the coating are performed (e.g., for each side) directly after each other, e.g., without touching the plurality of fibrous protrusions before forming the coating.

Example 132 is configured according to one of examples 1 to 131, wherein, the plurality of fibrous protrusions are deformed more after forming the coating than before forming the coating. This enhances the process result. For example, if a deformation of the fibrous protrusions is hard to avoid before forming the coating on the fibrous protrusions, the deformation of the fibrous protrusions may be reduced to an extent (e.g., degree and/or fraction), which is lower than the extent of deformation of the fibrous protrusions after forming the coating.

Example 133 is configured according to one of examples 1 to 132, wherein the vacuum manufacturing system (e.g., the transport device and/or the deformation device) may be configured such that the deformation (e.g., compression), e.g., an extent (e.g., degree and/or fraction) of deformation (e.g., compression), of the plurality of fibrous protrusions, which is supplied to the coating device, is zero (also referred to as undeformed) or at least less than the deformation (e.g., compression), e.g., an extent (e.g., degree and/or fraction) of the deformation (e.g., compression), as provided by the deformation device.

Example 134 is configured according to one of examples 1 to 133, wherein a first section of the substrate, which is exposed to the deformation device and/or the deformation process, and a second section of the substrate, which is exposed to the coating device and/or the coating process are coupled to each other by a transport roll (e.g., temperature control roll), e.g., being in contact with the transport roll.

Example 135 is configured according to one of examples 1 to 134, wherein the deformed protrusions include one or more (e.g., ten or more, e.g., hundred or more) pairs of (e.g., adjacent) protrusions, of which each protrusion is covered by a section of the catalytic surface.

Example 136 is configured according to one of examples 1 to 135, wherein the deformed protrusions include one or more (e.g., ten or more, e.g., hundred or more) pairs of (e.g., e.g., adjacent) protrusions formed by a first protrusion covered by a first section of the catalytic surface and a second protrusion covered by a second section of the catalytic surface, wherein, preferably, the first section of the catalytic surface and the second section of the catalytic surface are disposed between the first protrusion and the second protrusion (e.g., thereby separating the first protrusion and the second protrusion from each other) and/or wherein, preferably, the first section of the catalytic surface and the second section of the catalytic surface (e.g., physically) contact each other (e.g., thereby being electrically, e.g., ohmic, contacted to each other).

### Brief Description of the Drawings

Throughout the drawings, it should be noted that like reference numbers are used to depict the same or similar elements, features, and structures. The drawings are not necessarily to scale, emphasis instead generally being placed upon illustrating aspects of the disclosure. In the following description, some aspects of the disclosure are described with reference to the following drawings, in which:
Figures 1A to 1C respectively show each a substrate with fibrous protrusions in various states and various views according to various aspects;
Figure 1D shows a reeling process involving a substrate being reeled to roll in a schematic side view according to various aspects,
Figure 1E shows an electrochemical cell in a schematic side view according to various aspects,
Figures 2A, 3A and 7 respectively show one or more SEM images of a substrate with fibrous protrusions; according to various aspects,
Figures 2B and 3B respectively show the electrical properties of various substrates in a schematic graph according to various aspects,
Figure 2C shows a schematic flowchart of a method according to various aspects,
Figures 3C, 4A, 4C to 4E respectively show properties of various substrates in a schematic graph according to various aspects,
Figure 4B shows protrusion forming process in a schematic diagram according to various aspects,
Figures 5A, 5B, 6A and 6B respectively show a vacuum manufacturing system in a schematic architecture diagram according to various aspects,
Figure 5C shows multiple process control variables for controlling the protrusion forming process for various working examples in a schematic diagram according to various aspects,
Figure 5D shows the geometry of the reference area in a schematic perspective view according to various aspects,
Figure 6C shows a sputtering device in a schematic view through the substrate according to various aspects.

### Description

The following detailed description refers to the accompanying drawings that show, by way of illustration, specific details and aspects in which the disclosure may be practiced. One or more aspects are described in sufficient detail to enable those skilled in the art to practice the disclosure. Other aspects may be utilized and structural, logical, and electrical changes may be made without departing from the scope of the disclosure. The various aspects are not necessarily mutually exclusive, as some aspects may be combined with one or more other aspects to form new aspects. Various aspects are described in connection with methods and various aspects are described in connection with devices. However, it may be understood that aspects described in connection with methods may similarly apply to the devices, and vice versa. Throughout the drawings, it should be noted that like reference numbers are used to depict the same or similar elements, features, and structures.

In the field of substrate manufacturing, it is common to utilize various coatings and surface treatments to enhance the functional properties of substrates. Known systems typically involve the application of catalytic surfaces to substrates to improve their performance in applications such as electrochemical cells, sensors, and catalytic converters. These systems often rely on the deposition of thin films or coatings on flat or minimally structured surfaces to achieve the desired catalytic activity. However, the efficiency and effectiveness of these catalytic surfaces may be limited by the surface area available for reactions and the uniformity of the coating.

Aspects disclosed herein include a substrate (and manufacturing thereof) including a coating, e.g., using processes such as chemical vapor deposition (CVD), physical vapor deposition (PVD), and/or electroplating. These processes, in particular sputtering, provide high-quality coatings at high mechanical stability under operational conditions and assembly, such as high temperatures or mechanical stress.

Despite the progress made in the field of substrate processing, e.g., for manufacturing polymer-electrolyte membranes, there remains a need for improvement, e.g., regarding parameters like catalytic surface area, coating uniformity, and mechanical stability and/or electrical conductivity. However, improving some of these parameters may deteriorate others, leading to a tradeoff. For example, increasing the catalytic surface area may decrease electrical conductivity.

One aspect underlying the present disclosure is directed to provide additional process control variables, which facilitate an enhancement of such tradeoff, e.g., leading to an improved set of parameters resulting from the substrate processing. One example includes a deformation of protrusions, after coating the protrusions with a catalyst. As examples, the deformation increases the volumetric density of the protrusions by reducing the hollow volume between the protrusions, allows to increase the number of electrically conductive paths and/or to shorten the electrically conductive paths by contacting adjacent protrusions with each other via their coating.

The expressions "at least one," "at least a," and the like in reference to an element can be understood as indicating exactly one element or multiple elements. The at least one element can be, for example, exactly one element or several (e.g., two, three, or more) elements. The at least one element can include one or more elements, for instance, one or more groups of elements.

According to various aspects, the vacuum chamber may be provided by a chamber housing, in which one or more chambers may be provided, e.g., separated from each other by one or more chamber walls. In some aspects, a chamber wall may provide a gas separation barrier, through which the substrate is transported. The chamber housing may be coupled (e.g., in a gas-conducting manner) with a pump arrangement, such as a vacuum pump arrangement, to provide a reduced pressure or vacuum (vacuum chamber housing) and may be constructed in such a way that it withstands the effects of air pressure when evacuated. The pump arrangement (including at least one vacuum pump, e.g., a high vacuum pump, such as a turbomolecular pump) may enable the evacuation of a part of the gas from inside the processing chamber, e.g., from the processing space. Accordingly, one or more vacuum chambers may be provided within a chamber housing. In other words, the chamber housing may be configured as a vacuum chamber housing, and a coating chamber may be configured as a vacuum chamber.

The term "vacuum pressure" refers here to a low pressure in the vacuum range (i.e., a pressure of less than 0.3 bar), for example, a pressure between approximately 10 mbar and approximately 1 mbar (in other words, coarse vacuum) may be provided, or less, such as a pressure between approximately 1 mbar and approximately 10⁻³ mbar (in other words, fine vacuum) or less, for instance a pressure between approximately 10⁻³ mbar and approximately 10⁻⁷ mbar (in other words, high vacuum) or less, such as a pressure lower than high vacuum, for example, less than approximately 10⁻⁷ mbar (millibar).

A driving device (also referred to as drive apparatus) is understood herein as a converter that is configured to transform electrical energy into mechanical energy. A driving device includes, for example, an electric motor (e.g., with electric coils), piezoelectric motor, or the like. Other exemplarily components of the driving device may include: a compressor, a reciprocating piston coupled to the compressor, one or more piezo elements. For instance, the drive apparatus may be configured to deliver mechanical energy through torque or rotational movement.

In general, a substrate may be processed in a vacuum, such as by a coating process, so that the chemical and/or physical properties of the substrate may be altered. Various coating processes may be carried out to coat a substrate, among which a sputtering process (also referred to as sputtering, e.g., a sputter deposition process) is an established method of physical vapor deposition (PVD). For sputtering, a plasma-forming gas may be ionized using a cathode (also referred to as a magnetron cathode), and the plasma thus formed may be used to vaporize (e.g., disintegrate) a material to be deposited (also referred to as target material).

The term "processing device" (also referred to as processing apparatus) refers to a device that is configured to process an object, such as, for example, a substrate or layer. Examples of the process include: altering (e.g., geometrically, chemically, and/or physically), coating, cleaning, etching, etc., the object. Examples of process are additive (i.e., adding a material) and/or subtractive (i.e., removing material), e.g., both (also referred to as subtractive-additive process). Examples of processing device include: a heating device, a coating device, an etching device, a sputtering device, etc.

The term "coating device" (also referred to as coating apparatus) herein refers to a device designed to conduct a layer-forming process (also referred to as coating process) and may include, for example, a so-called material source. According to various aspects, the coating apparatus may be configured to coat an object, e.g., at least one substrate (i.e., a substrate or multiple substrates), which may be transported through a coating region defined by the coating device. For instance, the coating device may be configured to supply a gaseous (e.g., vaporized) coating material, which may be deposited on the at least one substrate to form a layer. Examples of components of a coating device include: a sputter target as a material source, a plasma source, a crucible as a material source for thermal evaporation of the coating material (e.g., by means of a laser, arc, electron beam, and/or conductively supplied heat energy), a precursor source as a material source, and/or a liquid-phase atomizer as a material source. A sputtering device may be configured to atomize the sputter target using plasma (also referred to as sputtering or sputtering process). Regarding the layer-forming process, a vapor deposition is referenced as an exemplary coating process, such as physical vapor deposition (PVD) or chemical vapor deposition (CVD). PVD includes forming a gas phase of the coating material, which may, optionally, chemically react with a reactive gas to form a chemical compound that is incorporated into the layer or constitutes the layer. During the chemical reaction in PVD, two or more materials are combined to form the chemical compound. The references made to PVD, e.g., sputtering, may understood as non-limiting and may apply to any other suitable coating process, e.g., including a chemical vapor deposition (CVD). CVD includes providing a gaseous precursor compound (also known as a precursor or reactant), which is decomposed into at least two reaction products, of which at least a first reaction product is incorporated into the layer as the coating material, and optionally a second reaction product is removed from the coating process as excess (e.g., using a pump). Optionally, CVD may be exposed to a plasma, by which the decomposition of the precursor is enhanced. The coating material, e.g., vaporized by sputtering, may be directed to a substrate, where it may deposit and form a layer.

The term "sputtering" refers to the process of disintegrating a material (also referred to as coating material or target material) using a plasma. The vaporized components of the target material are thus separated from each other and may be deposited elsewhere to form a layer. Sputtering may be performed using a sputtering device as coating device, which may include a magnet system (then also referred to as a magnetron). The target material may be provided via a sputter target (shortly also referred to as target), which may be tubular (then also called a tube target) or plate-like (then also called a plate target). To generate the plasma, a voltage may be applied to the sputter target (shortened to target), causing it to operate as a cathode. Even if the voltage is alternating, the terminology of "cathode" denoting the target is maintained.

By sputtering (also referred to as sputtering process), one or more layers (including or made from the target material) may be deposited on a substrate. Exemplarily modifications of sputtering include magnetron sputtering and reactive magnetron sputtering. Magnetron sputtering includes supporting the generation of plasma by a magnetic field, which may influence the ionization rate of the plasma-forming gas (e.g., working gas). The magnetic field may be generated by a magnet system, forming a plasma channel in which the plasma formation is stimulated. For sputtering, the target material may be arranged between the plasma channel and the magnet system, allowing the magnetic field to permeate the target into the plasma channel.

The reactive gas may include a gaseous material that is configured to react with the target material (e.g., with the gaseous target material) and/or may be incorporated into the deposited layer via a chemical reaction. Examples of the reactive gas include Oxygen, nitrogen, hydrogen, fluorine, chlorine, and/or ozone. Optionally, the reactive gas may be provided from a gaseous compound, such as nitrogen oxide, carbon oxide, hydrogen sulfide, methane or other gaseous hydrocarbons, and the like, by exposing said gaseous compound to a plasma. In case of a target material being capable of forming an oxide or being an oxide, e.g., when an oxide is to be deposited on the substrate, the reactive gas may include or be composed of Oxygen. Optionally, the reactive gas may be a gas mixture (reactive gas mixture) composed of several gases that react with the target material and/or the deposited layer, such as Oxygen and nitrogen, for instance, if an oxynitride is to be deposited. The reactive gas mixture may predominantly (i.e., more than 50%) consist of Oxygen, for example, to deposit an oxide. References made herein to Oxygen as exemplary reactive gas may apply in analogy to any other suitable reactive gas, e.g., which may be configured to react with the substrate (e.g., its polymer) to a gaseous material.

According to various aspects, the working gas may include a gaseous material that is chemically inert (also referred to as inert gas), meaning it participates in few chemical reactions. A working gas may be defined by and adapted to the target material used. For example, a working gas may include a gas or gas mixture that does not react with the sputter target (shortly also referred to as target), or the target material, to form a solid. The working gas may include a noble gas (e.g., Helium, Neon, Argon, Krypton, Xenon, Radon) or multiple noble gases. The plasma, which primarily causes the sputtering of the magnetron cathode (also called the sputter cathode), or the target material, may be formed from the working gas. References made herein to Argon as exemplary inert gas may apply in analogy to any other suitable inert gas, e.g., to which the polymer of the substrate is inert.

The reactive gas may possess a higher chemical reactivity than the working gas, e.g., regarding the target material and/or the substrate. For example, the vaporized target material and/or the substrate may react more quickly with the reactive gas (i.e., form more reaction product per unit time) than with the working gas (if it reacts chemically with the working gas at all). The reactive gas and the working gas may be supplied together or separately as process gas (e.g., as a gas mixture), for example, via one or more gas supplies. In some aspects, the target material may be sputtered by the working gas, and a chemical compound (in other words, the reaction product) may be formed therefrom by chemical reaction with a reactive gas, such as a metal compound or a metalloid compound, which may be deposited on a substrate. For example, the chemical compound may be a metal oxide (e.g., CeOx) or metalloid oxide with Oxygen as the reactive gas, a metal nitride or metalloid nitride with nitrogen as the reactive gas, a metal oxynitride or metalloid oxynitride with Oxygen and nitrogen as the reactive gas, or another metal or metalloid compound with a different reactive gas (e.g., a metal carbide or metalloid carbide using a carbon-including reactive gas). In other words, the material to be deposited (in other words, the reaction product) may include a metal and/or a metalloid.

Examples of a masking material (e.g., providing the masking caps) may include a chemical compound, such as, for example, an oxide, oxynitride, nitride, carbide, or the like. The masking material may include a metal, e.g., Cerium. The references made herein to Cerium as exemplarily component of the masking material may apply in analogy to any other component, which is suitable to provide a masking material, which withstands a subtractive process or is at least inert to the reactive gas. According to various aspects, Cerium provides a cost-effective material with reliable and controllable process conditions.

Various gaseous materials (also referred to as gas) are detailed herein, for example, Oxygen and/or Argon. The gaseous material may be made from only one chemical element (e.g., Oxygen), e.g., in molecular form or atomic form, which will herein also be indicated by the prefix "gas", e.g., "Oxygen gas" or "Argon" gas. For example, Oxygen gas consists of pure Oxygen, e.g., including molecular Oxygen, ozone and/or ionized Oxygen.

It is understood that the terms "consist of", "composed of", "made from" or "pure" or the like (e.g., in the context to a material or the chemical composition thereof) refers to a technical achievable purity, which may include a very small fraction of imputations, e.g., less than 0.1 atomic percent (at%), e.g., less than 0.001 at%. References made herein regarding amounts and fractions of a chemical composition, e.g., expressed in percent (%), may refer to at% or mass percent (m%).

Reference is made herein to a protrusion forming process as exemplarily structuring process. The term "structuring" (also referred to as patterning or structuring process) refers, in the context of an object, such as a layer or a substrate, to one or more processes, by which the geometry of the object is influenced (e.g., according to a target specification), and whose result is also referred to as a structured object. Structuring may take place at least partly (i.e., partially or fully) during the formation of the object and/or at least partly after the formation of the object. Structuring may include, for example, a masking process (e.g., by a shadow mask), which limits the spatial distribution of the material forming the object (e.g., layer) and/or the spatial distribution of a removal agent (e.g., plasma) removing the object. Structuring of an object may include, for example, a removal process (e.g., by a plasma or other removal agent), which removes materials from the object, e.g., while forming a layer.

The term "electrode" is understood to be an electrically conductive and/or metallic object to which an electrical potential (also referred to as electrode potential) may be applied during operation. The electrode may be, for example, plate-shaped (also referred to as a plate electrode) or wire-shaped (also referred to as a wire electrode). The electrode may include, for example, one or more layers. Optionally, the electrode may be electrically coupled with a circuit, which is configured, for instance, to provide the electrode potential.

A trench may be understood as a cavity, the depth of which is more than the width of which, e.g., by a factor of 5 or more, e.g., 10 or more, e.g., 100 or more. A cavity may be understood as a contiguous space that is free from solid material. The cavity may optionally be completely filled by a fluid, such as a liquid and/or a gas.

The term "transport system" may be understood as a set of interacting components to provide a transport process, examples of which include: one or more transport rolls, one or more bearing devices (by which, for example, each transport roll is rotatably supported), coupling device, drive train, gearbox, drive unit, etc. A transport system may be configured, for instance, to transport an object (e.g., a substrate and optionally including a substrate carrier), using the transport rolls, for example. A transport device may include the transport system and preferably the substrate carrier (also referred to as substrate holder). The substrate carrier may be plate-shaped.

According to various aspects, the term "substrate" refers to a work piece, e.g., as result of one or more processes and/or as precursor supplied to one or more processes. Exemplarily properties of the substrate include: flexible, plate-like, band-like. Exemplarily components of the substrate include: polymer, a foil, base layer, one or more protrusions, a coating, solid particles, and the like. For example, the substrate may be a polymer foil or a polymer sheet, which is processed by coating and/or structuring (e.g., to form one or more protrusions).

The term "base layer" in context to a substrate may, for example, refer to the supporting layer of the substrate, and may, in some aspects, be a "core" of the substrate, e.g., a precursor of the substrate (also referred to as precursor workpiece). The precursor workpiece (e.g., supplied to a subtractive process) may include the base layer, which remains after the subtractive process. For example, the precursor workpiece (e.g., a polymer membrane) may include one or more process layers (e.g., surface layers), which adjoin the base layer and/or are integrally connected to the base layer, thereby providing a monolithic configuration. For example, the one or more process layers may include two process layers, between which the base layer is disposed. During subtractive processing, trenches are formed in the process layer, such that the process layer is converted into the fibrous protrusions. After subtractive processing, the trenches may delimit the fibrous protrusions and the base layer.

To provide a monolithic configuration, the base layer may be integrally connected to the fibrous protrusions and/or the process layer (or may at least be made from the same chemical composition as fibrous protrusions and/or the process layer). Such monolithic configuration is cost effective and provides a stable structure. In such a monolithic configuration, the term "layer" refers to a layer-shaped region of the monolithic configuration, e.g., the precursor workpiece. The references made hereto apply in analogy to any other configuration of the base layer, which does not necessarily be integrally connected to the fibrous protrusions or the process layer.

A band-like substrate (also referred to as a tape substrate) may include or be made from a film, a non-woven fabric, a tape, and/or a woven fabric. For example, a band-like substrate may include or be made from a plastic foil (polymer tape), and/or a plastic sheet (polymer film). According to various aspects, the band-like substrate may include or be made from any material, that may be processed with a correspondingly low material thickness and/or as fibers using a winding process. In practical terms, a band-like substrate may be any substrate that may be wound onto and/or unwound from a roll (also referred to as drum) and/or may be processed from roll to roll. Furthermore, the band-like substrate may be flexible. Depending on the elasticity of the material used, the tape substrate may have a material thickness (also referred to as substrate thickness) ranging from approximately a few micrometers (e.g., around 1 µm) to approximately a few millimeters (e.g., up to about 10 mm), such as between approximately 0.01 mm and about 3 mm. The band-like substrate may have a width (extension transverse to the transport direction) ranging from approximately 1 cm (e.g., 30 cm) to about 500 cm or a width (also referred to as substrate width) of more than approximately 500 cm.

According to various aspects, a band-like substrate may be transported from roll-to-roll (i.e., rewound between winding rolls), e.g., using multiple rolls (also referred to as redirection rolls or redirection rollers), which redirect the substrate (or at least the transport path). To facilitate understanding, the redirection rolls are denoted according to their function, e.g., transport roll providing a roll to transport (e.g., redirect) the substrate, winding roll (Germ: "Wickler") providing roll for winding the substrate (e.g., to a rolled substrate), and a substrate roll (Germ: "Wickel") providing a rolled substrate (also referred as to coil, spool or winded substrate). The winding roll (also referred to as reeling roll) may include a tubular carrier, e.g., a shaft (e.g., a thorn), for carrying the substrate roll. The substrate roll may include an opening to receive the tubular carrier of the winding roll. A transport roll may be configured in various ways depending on the application purpose. For example, a transport roll may be configured as (e.g., active or passive, also referred to as loose or driven roll) guidance and/or redirection of the transport path, for tempering (e.g., cooling), or driving the substrate transport. Such transport roll for tempering (also known as a temperature control roll), such as a cooling roll, may be actively driven, for example, and its rotation may drive the substrate transport. The temperature control roll may, for example, include a ceramic surface (e.g., on a steel roller). The transport roll may be axially longer than the width of the tape substrate.

The term "fibrous protrusion" may be understood as an elongated protrusion, of which multiple protrusions (e.g., a cluster of protrusions) provide a fiber-like structure. Examples of the fibrous protrusion may include: a hair-shaped protrusion, a finger-shaped protrusion, a fiber-shaped protrusion (e.g., fiber), and the like. Examples of the fibrous protrusion extend outward from the base layer and/or are connected integrally to the base layer.

The term "coating" may be understood as material applied to the surface of an object, e.g., a substrate or a layer. Exemplarily components of the coating may include one or more layers, solid particles, and the like.

The term "catalysis" refers to a mechanism, which increases the rate of a chemical reaction by exposing the chemical reaction to a catalytic member, e.g., of which examples include a catalyst and/or catalytic surface. The term "catalytic surface" may be understood as surface, which is configured to enhance the rate of a chemical reaction without itself being consumed by or permanently altered in the chemical reaction. For example, the catalytic surface may provide an intermediate reactant of the chemical reaction, which is output by the chemical reaction without itself being consumed by or permanently altered in the chemical reaction. Examples of the "catalytic surface" may be provided by a specific structure, e.g., including but not limited to nano-dots, particles (e.g., nanoparticle), and/or a surface of a catalyst. Examples of the catalyst, which are referred to herein, include: Iridium, Platinum, and Iridium oxide, or a mixture thereof. The references made thereto should be understood as non-limiting and may apply in analogy to any type of catalytic member.

The term "deformation" in context to an object (e.g., deformed protrusions) may be understood as process (also referred to as deformation process), by which the object is altered in geometry (e.g., shape, size), e.g., plastically. The deformation process may include applying a force (e.g., pressure or strain) to the object, by which the geometry of the object is modified permanently (also referred to as plastic deformation). Examples of the deformation processes may include inclining, compressing, bending, twisting, and/or shearing.

The term "section of the catalytic surface" may be understood as surface area of the catalytic surface (e.g., of the coating). In context to deformed protrusions, a first section of the catalytic surface (a first surface area) proximate a first protrusion may contact a second section of the catalytic surface (a second surface area) proximate a second protrusion. Such contacting catalytic surface areas indicate that the fibrous protrusions have been deformed after forming the catalytic surface, e.g., after the fibrous protrusions have been coated. The contacting catalytic surface sections provide additional electrical contacts, thereby shortening the conductive paths, which reduces electrical losses and thereby enhances electrical properties (e.g., efficiency).

The term "temperature control device" (also referred to as thermal control device) may be understood herein as device configured to deplete thermal energy (then also referred to as cooling device) and/or supply thermal energy (then also referred to as heating device). An exemplarily implementation of the cooling device is configured to receive a cooling fluid, which receives the depleted thermal energy. An exemplarily implementation of the heating device is configured to receive electric power and to convert the electric power into the supplied thermal energy. The transfer of thermal energy between the temperature control device and the substrate may include thermal radiation, thermal convection, and/or thermal conduction. Exemplarily components of the temperature control device may include: one or more heat sinks, one or more thermal insulators, one or more heat exchangers, one or more or phase change materials, one or more conduits, one or more electrothermal converter. Optionally, the temperature control device may implement a feedback loop to regulate (also referred to as closed loop control) the (e.g., absolute) temperature of the substrate (then also referred to as thermal regulator).

Herein, reference is made to various views on the substrate, e.g., on one side of the substrate, to detail processes to which the substrate is exposed. In may be understood that the substrate may, optionally, be processed on each of the opposite sides of the substrate (also referred to as dual side processing), wherein the references made herein to the side of the substrate may apply to each of the opposite sides in analogy.

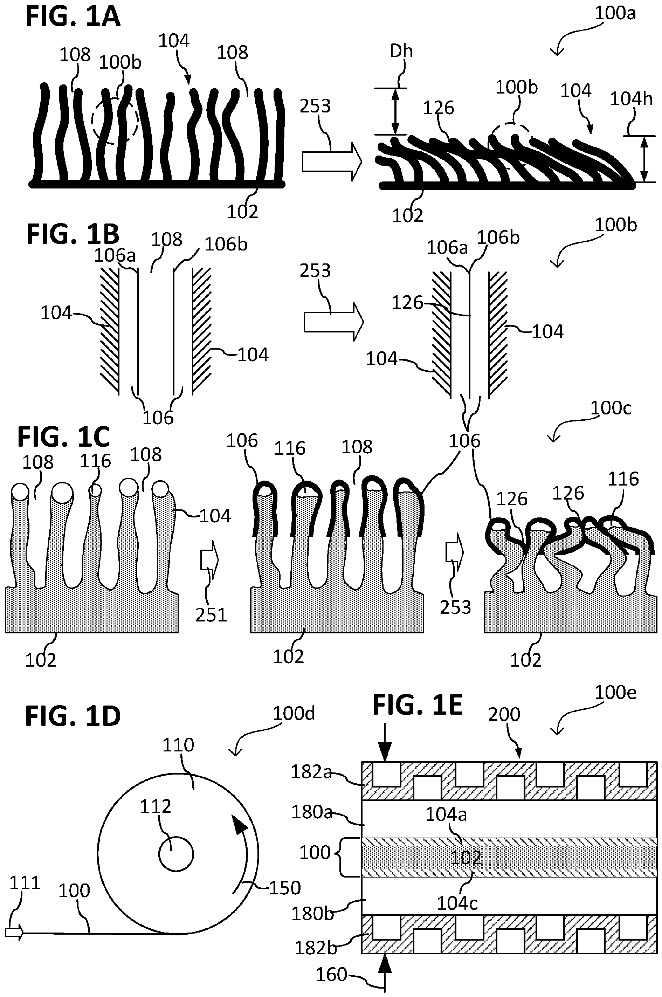

**Figure 1A** shows various states of the substrate 100 in a cross-sectional view According to various aspects, 100a, which is modified by a deformation process 253.

A first state of the substrate 100 (also referred to as undeformed state), which is supplied to the deformation process 253, includes a base layer 102 and a plurality of fibrous protrusions 104 adjoining the base layer 102. As example, the fibrous protrusions 104 of the undeformed state (also referred to as undeformed protrusion) project (e.g., upright) from the base layer 102 and are separated by trenches 108 from each other. The undeformed state may be less deformed than the deformed protrusions, e.g., including the protrusions as formed by the subtractive process (also referred to as undeformed).

A second state of the substrate 100 (also referred to as deformed state), which results from the deformation process 253, includes the base layer 102 and a plurality of deformed fibrous protrusions 104 adjoining the base layer 102. As example, the fibrous protrusions 104 of the deformed state (also referred to as deformed protrusion) are bend and/or inclined at an angle relative to the base layer 102. The deformed state includes more deformed protrusions than the first state and/or less hollow volume provided by the trenches 108 than the first state. The height 104h of the protrusions is reduced by the deformation process 253, thereby reducing the hollow volume provided by the trenches 108.

**Figure 1B** shows various states of the substrate 100 in a detailed cross-sectional view 100b on two adjacent fibrous protrusions 104 according to various aspects, which is modified by a deformation process 253. The substrate 100 includes a coating 106 providing a catalytic surface, of which a first catalytic surface section 106a covers a side of a first of the adjacent fibrous protrusions 104 and a second catalytic surface section 106b covers a side of a second of the adjacent fibrous protrusions 104.

The two catalytic surface sections 106a, 106b are facing each other and are, in the undeformed state, spatially separated from each other by a trench 108 delimited by the two catalytic surface sections 106a, 106b. In the deformed state, the two catalytic surface sections 106a, 106b are physically touching each other (also referred to as coating shunt), e.g., thereby providing an electrically conductive contact between the two catalytic surface sections 106a, 106b.

**Figure 1C** shows various states of the substrate 100 in a detailed cross-sectional view according to various aspects 100c, which is modified by a coating process 251 and a subsequent deforming process 253.

A first stage of the undeformed state (also referred to as structured state), which is exposed to the coating process 251, includes the base layer 102, the plurality of fibrous protrusions 104 adjoining the base layer 102 (e.g., the polymer thereof), and a masking layer provided by protection caps 116 (herein shortly also referred to as caps or masking caps) made from a first material (also referred to as masking material). Each of the masking caps may be island-shaped (or particle-shaped) disposed on a tip of a protrusion 104, e.g., contacting the polymer of the fibrous protrusions 104. An exemplarily implementation of the masking material may include or be formed from Cerium oxide.

A second stage of the undeformed state (also referred to as coated state), which results from the coating process 251, includes the base layer 102, the plurality of fibrous protrusions 104 adjoining the base layer 102, the masking caps 116 and a layer 106 made from a catalyst as second material (then also referred to as catalyst layer). The masking caps 116 may be disposed between the catalyst layer 106 and the fibrous protrusions 104 (e.g., the polymer thereof). Both, the masking caps 116 and the catalyst layer 106 may provide components of the functional coating. In this example, the catalyst layer 106 provides the catalytic surface of the functional coating.

An exemplarily implementation of the catalyst layer 106 may be formed by a sputtering process, e.g., provided by a sputtering device as detailed herein.

The deformed state includes the base layer 102, the plurality of deformed (e.g., collapsed) fibrous protrusions 104 adjoining the base layer 102, and the functional coating including the masking caps 116 and the catalyst layer 106. As detailed above, the deformation of the protrusions 104 may cause catalytic surface sections 106a to contact each other and form a compact structure.

As apparent the first catalytic surface section 106a and the second catalytic surface section 106b form a two-dimensional contact 126 (also referred to as interface area).

It may be understood that the catalyst layer 106 may, e.g., in case of a PVD (e.g., sputtering) used therefore, not necessarily cover the fibrous protrusions 104 evenly from top the bottom of the trenches. To enhance the extension of catalyst layer 106 into the trenches, the catalyst layer 106 may be formed under various angles, e.g., by moving the target relative to the substrate, tilting the substrate, using multiple targets disposed under various angles, and/or using a concave target. Alternatively, CVD or ALD may be used to enhance the extension of catalyst layer 106 into the trenches.

**Figure** 1D shows a deformation process 253 including a reeling process (also referred to as winding process) as exemplary redirection process 150 in a schematic side view along an axis of rotation according to various aspects 100d.

The reeling process includes transporting the substrate 100 towards a roller 112 (also referred to as reeling roll), which is rotated around the axis of rotation, thereby forming a roll 110 (also referred to as substrate roll) including a stack of multiple layers (also referred to as windings), of which each is provided by a portion of the substrate 100.

The reeling roll 112 (also referred to as reeling roller) is actively driven, e.g., by transferring a torque generated by an electrical motor to the reeling roll 112. The torque may be configured to provide a pressing process (also referred to as redirecting induced pressing process), e.g., by transferring strain to the portion of the substrate 100, which is transported towards the reeling roll 112 and/or gets into contact with the substrate roll 110.

The redirecting (e.g., reeling) induced pressing process may include pressing the windings of the substrate against each other, which induces pressure to the fibrous protrusions 104, thereby deforming the fibrous protrusions 104 of the substrate 100. For example, the reeling process is configured to apply tension to the substrate, facilitating the deformation of the fibrous protrusions.

The references made to the reeling process may in analogy apply to any other redirection process 150, by which the substrate 100 is pressed against a roll, e.g., to a transport roll. For example, the transport of the substrate 100 may be redirected by the transport roll, thereby pressing the transport roll against the substrate 100 (also referred to as redirecting induced pressing process). The redirecting induced pressing process may include pressing the roll against the fibrous protrusions 104, which induces pressure to the fibrous protrusions 104, thereby deforming the fibrous protrusions 104 of the substrate 100. For example, the redirection process is configured to apply tension to the substrate, facilitating the deformation of the fibrous protrusions.

**Figure** 1E shows a deformation process 253 including an assembling process 160 as exemplarily component of the deformation process 253 in a schematic side view according to various aspects 100e.

The assembling process 160 is detailed with reference to stacking multiple layers (then also referred to as stacking process) to provide a stack of layers (also referred to as layer stack). As example, layer stack provides an electrochemical cell 200 or at least a component thereof, which is not understood as limiting. The references made hereto may apply in analogy to any other type of assembling process 160 or another type of layer stack.

The substrate 100 includes the base layer 102 and a first set of fibrous protrusions 104a on a first side of the substrate and a second set of fibrous protrusions 104c on a second side opposite the first side. The first set of fibrous protrusions 104a may be coated with a first catalyst, e.g., Iridium. The second set of fibrous protrusions 104b may be coated with a second catalyst different from the first catalyst, e.g., Platinum.

The layer stack includes, as examples, two fluid distribution plates 182a, 182b (e.g., bipolar or unipolar plates 182a, 182b) and two electrodes 180a, 180b, e.g., an anode 180a and a cathode 180c, between the plates 182a, 182b. Each of the plates 182a, 182b may provide one or more fluid channels, e.g., at least one meander-shaped fluid channels facing the two electrodes.

An exemplarily implementation of each of the plates 182a, 182b is provided by a metal plate, which is optionally coated with an electrically conductive protection layer. Each of the fluid channels is provided by a meander-shaped grove, which is manufactured by reshaping (e.g., press-shaping) the metal plate. Another implementation of each of the plates 182a, 182b is provided by a graphite plate.

The assembling process 160 may include adding the substrate 100 to the layer stack, e.g., by disposing the substrate 100 between the electrodes 180a, 180b. The assembly process 160 may further include a pressing process (also referred to as stacking induced pressing process), e.g., by applying a force to the plates 182a, 182b. The stacking induced pressing process includes pressing the electrodes 180a, 180b against the substrate 100, which induces pressure to the fibrous protrusions 104, thereby deforming the fibrous protrusions 104 of the substrate 100. For example, the reeling process 150 is configured to apply tension to the substrate, facilitating the deformation of the fibrous protrusions.

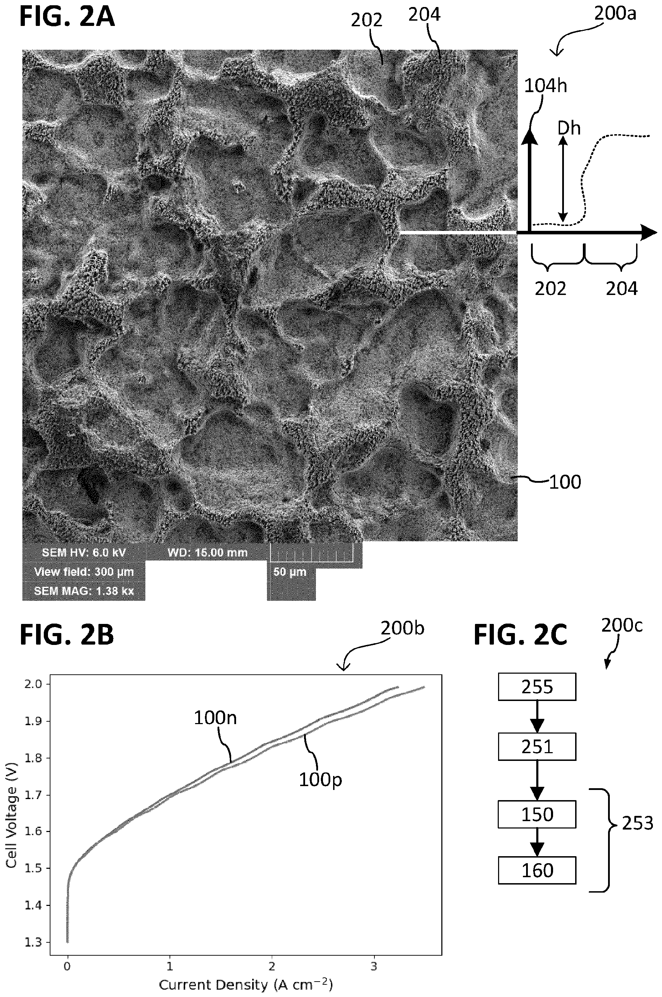

**Figure 2A** shows a scanning electron microscope SEM (Scanning Electron Microscope) image of a deformed state of the substrate 100 onto the deformed fibrous protrusions 104 as working example according to various aspects 200a. The SEM image has a view field of 300 micrometers, and a working distance of 15.00 mm (Millimeter). The scale bar indicates a length of 50 micrometers for reference.

The image provides a detailed view of the surface morphology of the substrate, revealing the presence of multiple distinct groups of deformed protrusions: a first group 202 and the second group 204. The first group 202 and the second group 204 of deformed protrusions differ from each other by a value Dh in height 104h. This difference may result from an inhomogeneous pressure applied to the fibrous protrusions and/or from an uneven surface pressed against the fibrous protrusions.

For this working example, the uneven surface was provided by a surface of the anode or cathode of the electrochemical cell 200. The electrochemical cell 200 was disassembled after the assembling process 160 to reveal the result of the deformation process 253, which included a height compression (e.g., height reduction) of fibrous protrusions 104 by at least the value Dh.

For example, the first group 202 of deformed protrusions may have a higher degree of deformation, compactness, and higher volumetric density than the second group 204 of deformed protrusions. Alternatively or additionally, the first group 202 of deformed protrusions may include a higher number of coating shunts than the second group 204 of deformed protrusions.

**Figure 2B** illustrates the electrical properties of an electrochemical cell for two states of substrates as working example according to various aspects 200b, namely the undeformed state and the deformed state, in a schematic diagram. The diagram indicates the cell voltage versus current density of the electrochemical cell during operation. The x-axis represents the current density in amperes per square centimeter (A cm⁻²), while the y-axis represents the cell voltage in volts V. For the working example, the substrate may be etched at 260 Watt and subsequently coated with 70 nm Iridium (e.g., 0.158 mg cm⁻² Ir).

The working example was obtained by measuring the electrical properties the electrochemical cell before (non-pressed substrate) and after (pressed substrate) the pressing process. The curve 100n for the non-pressed substrate represents the undeformed state and the curve 100p for the pressed substrate represents the deformed state.

The curves demonstrate the performance characteristics of the electrochemical cell under different conditions of mechanical deformation, indicating how the pressing process affects the cell voltage at various current densities. As apparent from the curves, the electrical efficiency increased significantly by the deformation process.

**Figure 2C** depicts a method according to various aspects 200c in a schematic flowchart. The method includes, in 251, the coating process, and in 253, the deformation process. The method includes optionally, in 255, forming the plurality of fibrous protrusions 104 (also referred to as protrusion forming process 255). The deformation process 253 may include the redirecting (e.g., reeling) process 150 and/or the assembling process 160.

The redirecting process 150 may be configured to redirect the substrate 100 under tension, e.g., over a transport roll or to a substrate roll. Alternatively or additionally the assembling process 160 may include the assembly of an electrochemical cell by including the substrate 100.

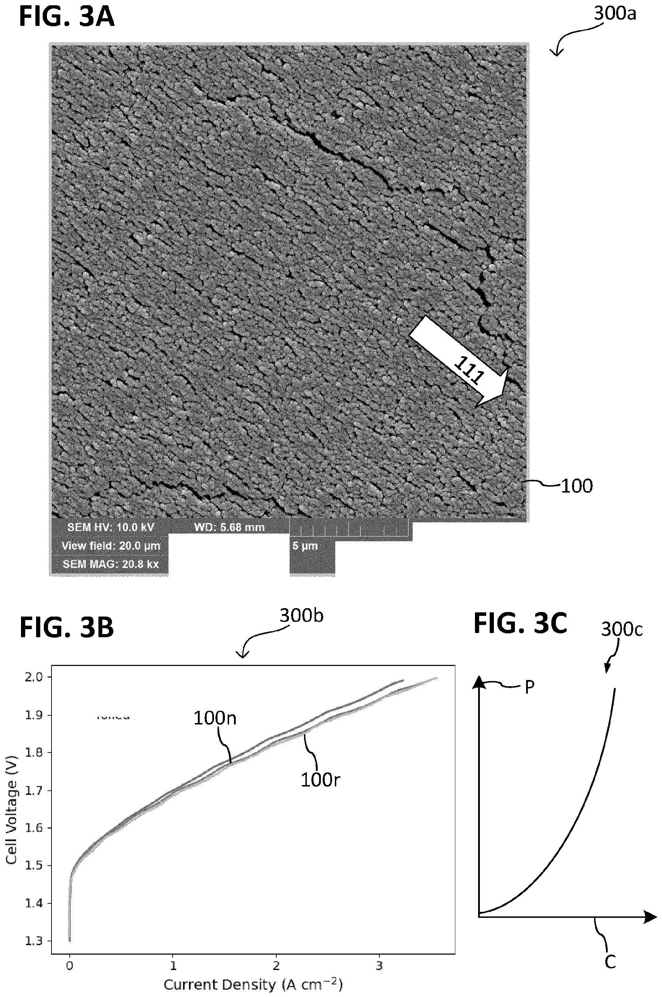

**Figure 3A** shows a scanning electron microscope SEM image of a deformed state of the substrate 100 onto the deformed fibrous protrusions 104 as working example according to various aspects 300a. The image is captured with an accelerating voltage of 10.0 kV and a working distance of 5.68 mm. The view field is 20.0 µm. For the working example, the substrate may be etched at 260 Watt and subsequently coated with 70 nm Iridium (e.g., 0.158 mg cm⁻² Ir).

The image provides a detailed view of the surface morphology of the substrate, revealing the presence of multiple fibrous protrusions 104, which are deformed into the same direction, e.g., against the transport direction 111, by a redirection process. For this working example, the redirection process was implemented by a transport roll, which was pressed against the fibrous protrusions 104 of the substrate 100.

**Figure 3B** illustrates the electrical properties of an electrochemical cell for two states of substrates as working example according to various aspects 300b, namely the undeformed state and the deformed state, in a schematic diagram. The diagram indicates the cell voltage versus current density of the electrochemical cell during operation. The x-axis represents the current density in amperes per square centimeter (A cm⁻²), while the y-axis represents the cell voltage in volts V.

The working example was obtained by measuring the electrical properties the electrochemical cell before (non-rolled substrate) and after (rolled substrate) the redirection process. The curve 100n for the non-rolled substrate represents the undeformed state and the curve 1 00r for the rolled substrate represents the deformed state.

The curves demonstrate the performance characteristics of the electrochemical cell under different conditions of mechanical deformation, indicating how the pressing process affects the cell voltage at various current densities. As apparent from the curves, the electrical efficiency increased significantly by the deformation process.

**Figure 3C** the deformation C (e.g., height compression) of the fibrous protrusions according to various aspects 300c in a schematic diagram as function of the compressive pressure P applied to the fibrous protrusions by the deformation process 253. As example, the compressive pressure may be applied to the substrate by the deformation device, e.g., by a transport roll. As apparent, the more compressive pressure P is applied by the deformation process 253, the more height compression is obtained, thereby reducing the height 104h of fibrous protrusions 104 (see also Fig.1A). This correlation between the degree of deformation C and the compressive pressure P may be used to provide a deformation process 253, which deforms the fibrous protrusions (which may be undeformed as result of the protrusion forming process, e.g., having a degree/fraction of zero deformation) more than in the time between the protrusion forming process and the coating process. This enhances the process result, e.g., as preserving a high number of catalytic surface sections, which can be brought into contact with each other by the deformation process.

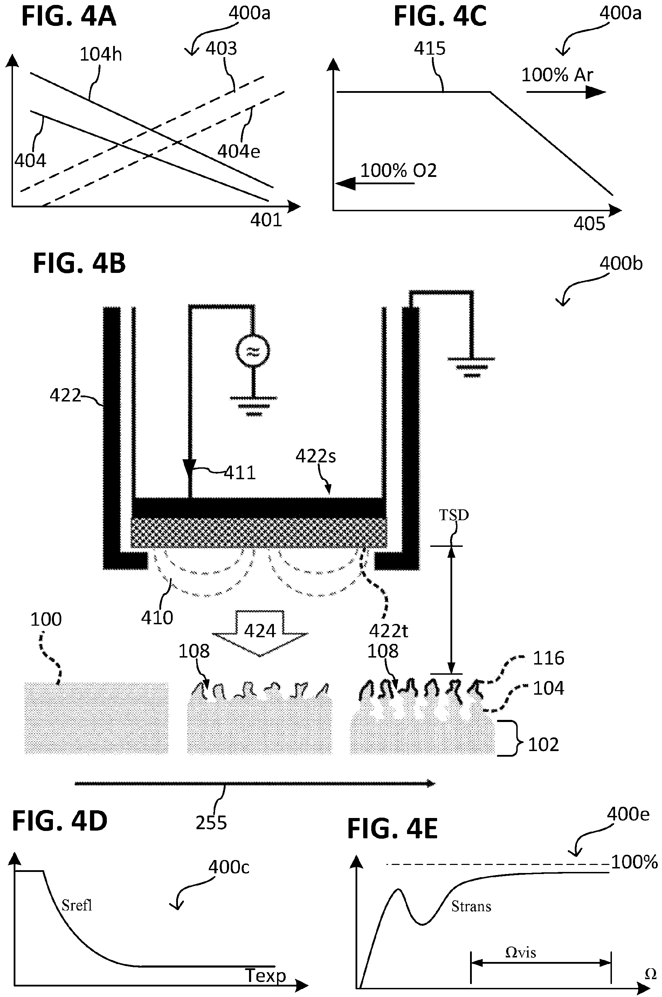

**Figure 4A** shows the relationship between the degree of deformation 401 and the properties of the substrate 100 in a schematic diagram according to various aspects 400a. Generally, the degree of deformation 401 is a function of the pressure applied to the fibrous protrusions 104 and may, over a wide range, increase with the pressure applied to the fibrous protrusions 104, e.g., until full collapse of the fibrous protrusions 104. Between the undeformed stated and the state of full collapse of the fibrous protrusions 104 exists an optimum for the degree of deformation, at which the properties of the substrate 100 fulfill the quality criteria at best. Such optimum for the degree of deformation may be determined experimental, e.g., by a sequence of deformation (e.g., redirecting induced or stacking induced) pressing processes.

As apparent from the diagram, the electrical conductivity 404e of the substrate 100 and the volumetric density 403 of the fibrous protrusions 104 increase with the degree of deformation 401. Analogously, the height 104h of the fibrous protrusions and the volume 404 of trenches 108 between the protrusions decrease with the degree of deformation 401.

**Figure 4B** shows a protrusion forming process 255 in a schematic diagram according to various aspects 400b. The protrusion forming process 255 includes a sputtering process as exemplarily additive process conducted by a processing device 422, e.g., a sputtering device 422s thereof. The sputtering device 422s provides a plasma source and includes a sputtering target 422t made from a target material.

The protrusion forming process 255 includes exposing the sputtering target 422s and the substrate to a plasma 410 generated by the plasma source. The plasma 410 is supplied with electrical power 411 (also referred to as plasma power) provided to the sputtering target 422t, which may be used as a process control variable for controlling the protrusion forming process 255. Examples for process control variables for controlling the protrusion forming process 255, include the distance (TSD) between the target 422t of the sputtering device 422s and the substrate 100, the exposure time and the plasma power 411.

Regarding the process control variable, it may be understood that various implementations may include a control device or at least software, which is configured to generate one or more control signals to modify one or more process control variables.

The protrusion forming process 255 includes to transfer the target material from the solid state in into gaseous state 424 (e.g., by vaporization or sputtering), which is emitted towards the substrate 100. The target material forms the masking layer on the substrate 100, which is exposed to the plasma 410. The protrusion forming process 255 includes further removing material from the substrate 100 and/or the masking layer by plasma etching as exemplarily subtractive process. This implements a subtractive process (e.g., plasma etching) simultaneous to the additive process (e.g., sputtering process).

Performing the subtractive process simultaneous to the additive process (also referred to as subtractive-additive process) allows to form and remove the masking layer simultaneously, such that the masking layer forms small islands 116 (also referred to as masking caps), which prevent the underlying area of the substrate 100 (also referred to as masked area) to be exposed to the subtractive process, e.g., plasma etching. Illustratively, the masking caps 116 provide a perforated shadow mask. Trenches 108 are (e.g., only) formed in the areas of the substrate 100 (also referred to as unmasked areas), which are exposed to the subtractive process, e.g., the plasma etching. The depth of the trenches 108 may increase as a function of the time (also referred to as exposure time), the substrate 100 is exposed to the plasma. At the end of the protrusion forming process 255, the trenches 108 reach the base layer 102 of the substrate, wherein the resulting depth of the trenches 108 define the height 104h of the fibrous protrusions 104 in the undeformed state (e.g., as manufactured).

An exemplarily implementation of the protrusion forming process 255 includes Cerium oxide (CeOx) as target material and as masking material. Due to the plasma etching and simultaneous to the deposition of Cerium oxide on the substrate 100, a fiber-like structure with a large surface area is formed. The substrate 100 is etched in the unmasked areas, which are exposed to the plasma. The formed trenches 108 separate the masked areas of the substrate 100, which are separated from the plasma etching by CeOx islands, thereby forming the fibrous protrusions 104. The deposition rate of CeOx may be in range of 0.001 Nanometer per minute (nm/min) to 100 nm/min.

The result of the protrusion forming process 255 may provide the structured state of the substrate 100, which includes the base layer 102, the plurality of fibrous protrusions 104 adjoining the base layer 102 (e.g., the polymer thereof), and the masking layer provided by masking caps 116. Each of the masking caps may be disposed on a tip of a protrusion 104, e.g., contacting the polymer of the fibrous protrusions 104.

**Figure 4C** illustrates the properties of the structured state of the substrate 100 as working example according to various aspects 400c. The diagram shows the dependency of a result representing parameter 415 as function of the chemical composition 405 of the working gas supplied to the plasma 410. Illustratively, the result representing parameter 415 may represent the result of the protrusion forming process, e.g., in terms of change of surface area 415 provided by the fibrous protrusions 104, and may be a function of the various parameters, of which examples include: the depth of the trenches 108, the number of trenches and/or fibrous protrusions 104 per area.

In these working examples, the result representing parameter 415 is the change of surface area. The chemical composition of the plasma, e.g., the fraction of Oxygen and/or Argon in the plasma, is a function of the chemical composition 405 of the gas supplied to the plasma 410, which was varied from 100 percent Oxygen 415 to 100 percent Argon 405. In these working examples, it was found that a working gas having a fraction of Oxygen gas (also referred to as Oxygen gas fraction) above 50% may be beneficial for the protrusion forming process. As example, the working gas may have an Oxygen gas fraction of more than about 60%, e.g., more than about 80%, e.g., more than about 90%, e.g., more than about 99% (e.g., being made from Oxygen gas).

**Figure 4D** illustrates the optical properties of the substrate 100 as result representing parameter for various working examples in a schematic diagram according to various aspects 400d. The diagram indicates the reflectivity (Srefl) averaged over the visible spectrum (380 nm to 780 nm), e.g., specular reflectivity, of the substrate 100 as function of the exposure time (Texp). Illustratively, the optical reflectivity of the substrate 100 may provide a result representing parameter for the protrusion forming process. The optical reflectivity decreases with increasing depth of the trenches 108, the number of trenches and/or fibrous protrusions 104 per area.

**Figure 4E** illustrates the properties of the structured state of the substrate 100 as working example according to various aspects 400e. The diagram indicates the optical transmissivity (Strans) of the substrate 100 as function of the wavelength Ω, wherein the over the visible spectrum Ωvis is in the range from 380 nm to 780 nm. Illustratively, the optical transmissivity of the substrate 100 may provide a result representing parameter for the protrusion forming process. The optical transmissivity decreases with increasing depth of the trenches 108, the number of trenches and/or fibrous protrusions 104 per area. For example, the optical transmissivity decreases from about 100% of the unprocessed substrate to a value in he range between 80% and 95%, e.g., withing the visible spectrum Ωvis or averaged over the visible spectrum Ωvis. It is noted that the Strans + Srefl + Sabs = 1, wherein Sabs denotes the optical absorption. As both optical parameters, Strans + Srefl, are decreased by the protrusion forming process, the optical absorption, Sabs is increased.

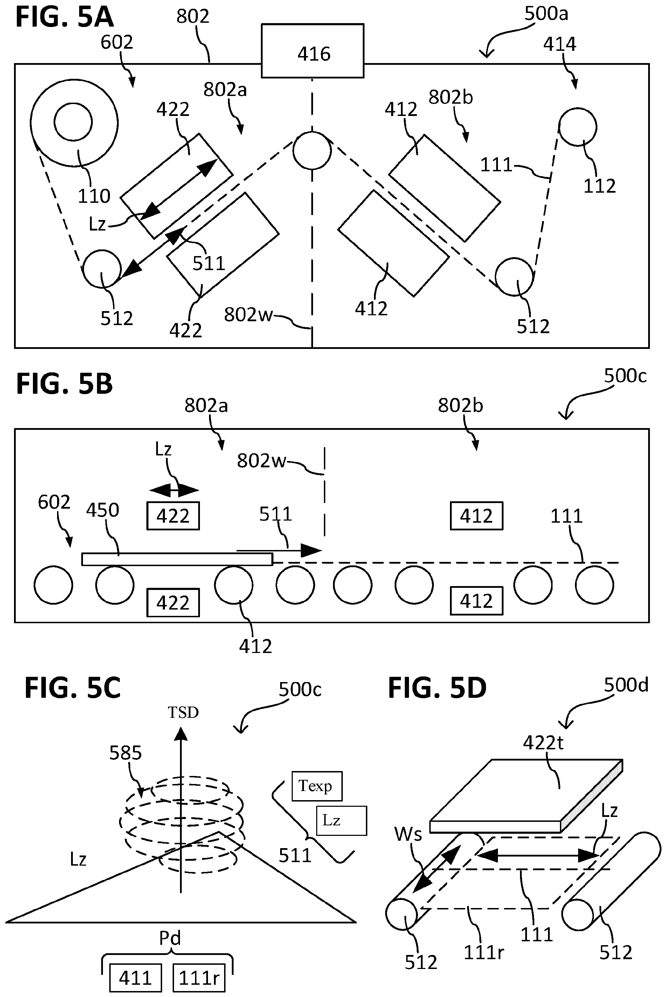

**Figure 5A** shows a vacuum manufacturing system in a schematic architecture diagram according to various aspects 500a. The vacuum manufacturing system includes a vacuum chamber 802, which includes two distinct regions, 802a and 802b, separated by a chamber wall 802w from each other.

The vacuum manufacturing system includes a transport device 602, which is configured to provide a transport path 111 in the vacuum chamber 802 and to transport a substrate 100 along the transport path 111, e.g., at a velocity indicated by arrow 511. The transport path 111 is redirected by one or more transport rolls 512 of the transport device 602. The substrate is provided as first substrate roll 110 and transported from the substrate roll 110 along the transport path 111 to the reeling roll 112, where the substrate is reeled to a second substrate roll.

The vacuum manufacturing system includes one or more processing devices 422, of which each processing device 422 is configured to provide the protrusion forming process (e.g., the subtractive-additive process), to which the substrate 100 is exposed. In some aspects, the one or more processing devices 422 include one or more pairs of processing device 422, between which the transport path 111 is disposed. This allows for dual side processing the substrate 100. The one or more processing devices 422 are disposed in the first processing region 802a. An exemplarily implementation of the processing device 422 includes a subtractive processing device 422, which is configured to form the fibrous protrusions by exposing the substrate to a subtractive process, e.g., to plasma etching.

The one or more processing devices 422 may provide a distance of transport (also referred to as process length or as length of exposure), Lz, along which the substrate is exposed to the protrusion forming process (e.g., the subtractive-additive process). Illustratively, the process length, Lz, denotes the accumulated length of the transport path 111, along which the substrate 100 is exposed to the protrusion forming process (e.g., the subtractive-additive process). For example, the process length, Lz, may be the accumulated length of the transport path 111, along which the substrate 100 is exposed to the plasma etching.

The vacuum manufacturing system includes further one or more coating devices 412, of which each coating device 412 is configured to provide the coating process, to which the substrate 100 is exposed. In some aspects, the one or more coating devices 412 include one or more pairs of coating devices 412, between which the transport path 111 is disposed. This allows for dual side processing the substrate 100. The one or more coating devices 412are disposed in a second processing region 802b.

An exemplarily implementation of the vacuum manufacturing system is configured to form the fibrous protrusions 104 in the first process region 802a by the one or more processing devices 422 and deposit the catalytic layer on the fibrous protrusions 104 in the second process region 802b. The first process region 802a and the second process region 802b differ from each other by the chemical gas composition, to which the substrate 100 is exposed.

An exemplarily implementation of the first process region 802a may be supplied (e.g., only) by a first working gas having a fraction of Oxygen gas (also referred to as Oxygen gas fraction) above 50%. As example, the first working gas may have an Oxygen gas fraction of more than about 60%, e.g., more than about 80%, e.g., more than about 90%, e.g., more than about 99% (e.g., being made from Oxygen gas). Alternatively or additionally, the first working gas may have an inert gas fraction of less than about 40%, e.g., less than about 10%, e.g., less than about 1%, e.g., less than about 0.1% (e.g., being made from an inert gas).

An exemplarily implementation of the second process region 802b may be supplied (e.g., only) by a second working gas having a fraction of inert gas (also referred to as inert gas fraction) above 50%. As example, the second working gas may have an inert gas (e.g., Argon gas) fraction of more than about 60%, e.g., more than about 80%, e.g., more than about 90%, e.g., more than about 99% (e.g., being made from inert gas). Alternatively or additionally, the second working gas may have an Oxygen gas fraction of less than about 40%, e.g., less than about 10%, e.g., less than about 1%, e.g., less than about 0.1%.

An exemplarily implementation of the chamber wall 802w may include an opening, through which the transport path 111 extends. The chamber wall 802w may separate the first process region 802a from the second region 802b to minimize a gas exchange between the first process region 802a and the second region 802b. For example, the gas exchange between the first process region 802a and the second region 802b may be less than the supply of working gas to the first process region 802a and/or the second region 802b.

An optional abatement system 416 is also depicted, which manages the gaseous by-products generated during processing the substrate. This optional abatement system 416 may be configured to separate one or more contamination from the gas composition, which is depleted from (e.g., pumped out of) the vacuum chamber 802, e.g., of the first process region 802a and/or the second region 802b. Examples of the contamination include: one or more residues from etching the substrate, Carbon-based gases, e.g., Carbon (C) fluoride (CFx), Carbon oxide (e.g., COx), Carbonyl fluoride (e.g., CFxOy), and/or Sulfur-based gases, e.g., Sulfur oxide (e.g., SOx), and Sulfur-based acie (e.g., HSyOx).

As illustrated, the vacuum manufacturing system may include one or more deformation device 414, e.g., implemented by a roll (e.g., transport roll 512 and/or a reeling roll 112). The deformation device 414 may be configured to transfer a pressing force to the substrate 100, by which the fibrous protrusions 104 are deformed. For example, the roll-implemented deformation device 414 may be configured to develop the pressing force by redirecting the substrate 100 and/or by transferring a tensile strain to the substrate 100.

It may be understood that the substrate may be reeled multiple times between the reeling rolls (e.g., including at least one forward reeling and at least one reverse reeling) within the vacuum chamber 802, e.g., to allow the substrate to be exposed to more than one coating process and/or more than one protrusion forming process. Also, a coating device may be, in a first phase of the method, be configured to perform the protrusion forming process, and, in a second phase of the method, to perform the coating process, e.g., by reconfiguring the coating device.

**Figure 5B** shows a vacuum manufacturing system in a schematic architecture diagram according to various aspects 500b similar to aspects 500a, with the difference that the transport path is substantially linear. This allows for transporting a planar substrate carrier 450 by the transport rolls 412, wherein the substrate 100 is carried by, e.g., attached to, the substrate carrier 450.

**Figure 5C** illustrates multiple process control variables for controlling the protrusion forming process for various working examples in a schematic diagram according to various aspects 500c.

The diagram plots a process control variable space (also referred to as operation space) defined by multiple process control variables, which include the transport velocity 511, the process length, Lz, the area density Pd of the plasma power (also referred to as power density Pd), and the target-substrate distance TSD.

Further, the diagram depicts the position of an ellipsoid 585 representing an area of the process control variable space, in which the result of the protrusion forming process fulfills certain criteria regarding the electrical conductivity and/or effective surface area.

An exemplarily implementation of the power density Pd may by expressed as process control variable, which represents (e.g., equals) the plasma power, which is supplied via the sputter target, divided by a reference area, e.g., the area of the sputter target. The reference area may be expressed as parameter, which represents (e.g., equals) the area of a projection of the sputter region onto a reference plane (also referred to as transport plane), in which the transport path is disposed and that is perpendicular to the axis of the rotation of one or more transport rolls.

**Figure 5D** illustrates the geometry of the reference area 111r in a schematic perspective view according to various aspects 500d. For a single sputtering target 422t, the process length, Lz, may equal the length of the reference area 111r along the transport path 111. The reference area 111r may equal the projected area of the sputtering target 422t onto the transport plane, which may be perpendicular to the direction of the TSD. It may be understood that the plasma power, the process length, Lz, and/or the reference area may be accumulated for multiple sputtering targets along the transport path 111.

Certain relations of the process control variables have been found being beneficial for the process control variables, which will be outlined in the following process examples, of which each process example may optionally configured according to one of Example 44 to Example 51.

According to a process example 1, the distance (TSD) of the target from the transport path is in the range from 1 cm to 100 cm (e.g., 10 cm). Alternatively or additionally, the plasma power density, e.g., supplied to one or more process devices, may be in the range from 10⁻³ W cm⁻² to 10 W cm⁻².

According to a process example 2, a process control variable representing (e.g., equaling) the plasma power, e.g., supplied to one or more process devices, divided by the width, Ws, of the substrate may be in the range from 1 W/cm to 500 W/cm. The width, Ws, of the substrate may be the extension of the substrate along a direction, which is perpendicular to the transport direction and/or parallel to the axis of rotation of one or more transport rolls.

According to a process example 3, a process control variable, representing (e.g., equaling) the area density Pd of the plasma power 411 (also referred to as power density Pd) multiplied by the process length, Lz, and divided by the transport velocity 511 may be in the range from about 0.1 Watt per Square centimeter and per (Centimeter per Second) (W cm⁻²)/(cm s⁻¹) to 50 (W cm⁻²)/(cm s⁻¹), e.g., from 1 (W cm⁻²)/(cm s⁻¹) to 5 (W cm⁻²)/(cm s⁻¹), e.g., about 2.5 (W cm⁻²)/ (cm s⁻¹).

According to a process example 4, a process control variable, representing (e.g., equaling) the power density Pd multiplied by the exposure time, Texp, may be in the range from 0.005 W·cm⁻²·min (Watt per square centimeter times minutes) to 500 W·cm⁻²·min, e.g., 0.01 W·cm⁻²·min to 100 W·cm⁻²·min, e.g., 0.03 W·cm⁻²·min to 33 W·cm⁻²·min.

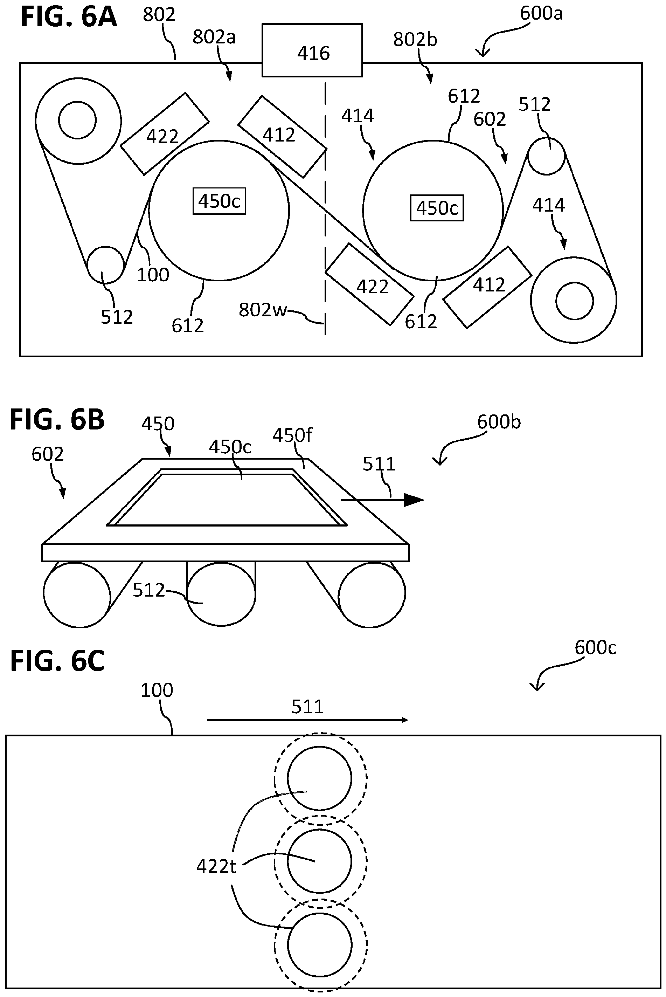

**Figure 6A** shows a vacuum manufacturing system in a schematic architecture diagram according to various aspects 600a, similar to aspects 500a, with the difference that the transport device includes one or more temperature control roll 612, e.g., per side of the substrate, which should be processed. For example, the vacuum manufacturing system may include, per temperature control roll 612, one or more processing devices 422 and/or one or more coating devices 412, which are configured to process a section of the substrate contacting the temperature control roll 612.

An exemplarily implementation of the temperature control roll 612 may be configured to deplete thermal energy from the substrate 100 (also referred to as cooling the substrate 100), e.g., by a temperature control device (e.g., cooling device) 450c. This broadens, for example, the range of the power density Pd, to which the substrate is exposed, as preventing overheating and ensuring optimal processing conditions.

An exemplarily implementation of the vacuum manufacturing system includes a vacuum chamber 802, which is divided into two distinct regions, 802a and 802b, separated by a chamber wall 802w. This division allows for different atmospheric chemical compositions to be maintained in each region, facilitating controlling temperature conditions.

Within the vacuum chamber, a transport device 602 is configured to transport the substrate 100 along the transport path 111. This transport device 602 includes multiple transport rolls 512, which guide the transport path 111 through the vacuum chamber 802. The substrate is initially introduced into the chamber as substrate roll and is directed over the transport rolls 512, ensuring precise movement and alignment during processing.

One or more rolls of the transport device 602 may implement a deformation device 414. The deformation device 414 may be configured to transfer a pressing force to the substrate 100, by which the fibrous protrusions 104 are deformed. For example, the roll-implemented deformation device 414 may be configured to develop the pressing force by redirecting the substrate 100 and/or by transferring a tensile strain to the substrate 100.

**Figure 6B** shows a transport device 602 in a schematic perspective view according to various aspects 600b. The transport device 602 includes a substrate carrier 450 and multiple transport rolls 512, which are configured to transport the substrate carrier 450 along the transport path 111 with a transport velocity 511. The substrate carrier includes a frame 450f (also referred to as carrier frame), which is configured to hold a flexible substrate.

An exemplarily implementation of the substrate carrier 450 is plate shaped and includes an opening extending through the carrier frame 450f, e.g., through a holding area of the carrier frame 450f. The carrier frame 450f is configured to hold the substrate 100 within the holding area, e.g., by applying tensile strain to the substrate, ensuring it remains taut during processing.

An exemplarily implementation of the substrate carrier 450 includes a cooling device 450c, which is configured to cool the substrate 100, e.g., by depleting thermal energy from the substrate, thereby preventing overheating and ensuring optimal processing conditions.

The substrate is transported via the substrate carrier 450 in the direction indicated by arrow 511, moving over multiple transport rolls 412. This movement is carefully controlled to ensure consistent exposure to the processing devices.

**Figure 6C** shows a sputtering device, e.g., sputtering device 422s or as coating devices 412, in a schematic view through the substrate 100 according to various aspects 600c. The sputtering device according to aspects 600c may include multiple targets 422t, which are disposed successionally along a direction, which is perpendicular to the direction 511 is substrate transport (also referred to as transport direction 511). Alternatively or additionally, the sputtering device according to aspects 600c may include multiple targets 422t, which are disposed successionally along the transport direction 511, which increases the process length, Lz.

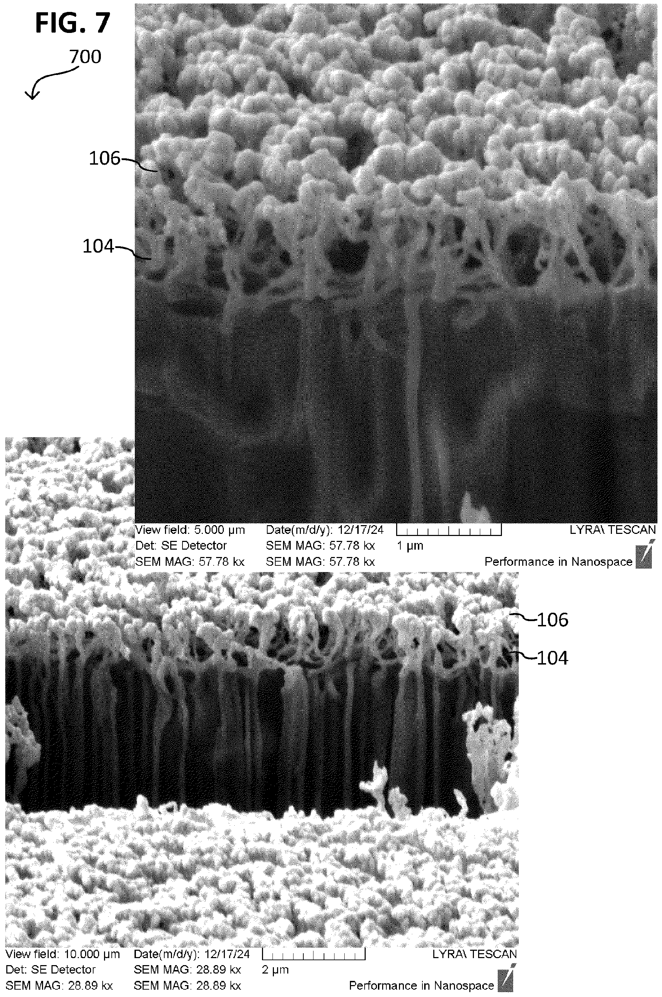

**Figure 7** shows various cross-sectional scanning electron microscope SEM (Scanning Electron Microscope) images of an undeformed state of the substrate 100 onto the fibrous protrusions 104, which are coated by a catalyst layer 106, as working example according to various aspects 700. As apparent, the catalyst layer 106 covers the tip of the fibrous protrusions 104, between which multiple trenches 108 are formed. The trenches 108 form an interconnected network of cavities, which collapse, when the fibrous protrusions 104 are deformed (e.g., compressed).

In the following, various working examples are provided with reference to the aspects described herein.

A series #1 of working examples revealed enhanced properties of the substrates, after the substrates have been rolled. Based thereon a reeling process and/or pressing process may be implemented by the transport device, e.g., one or more redirection rolls thereof, by which the substrate is transported (e.g., redirected). Not each of the rolls needs to be actively driven. For example, the transport device may be configured to induce tensile strain at a point of the substrate, which contacts the redirection roll. The tensile strain is converted into a pressing force, by which the substrate, e.g., the fibrous protrusions thereof, is pressed against the redirection roll. As example, the transport device may include, for each side of the substrate, on which fibrous protrusions are formed, a redirection roll, which is configured to be pressed against the side of the substrate, on which the fibrous protrusions are formed.

A series #2 of working examples revealed enhanced properties of the substrates, when a controllable gas separation is implemented between the CeOx-based protrusion forming process and the Iridium (Ir) based coating process. For example, the gas separation may be implemented by the gas separation wall. The controllable gas separation may allow to control the exchange of gas between the two distinct process regions separated by the gas separation wall from each other. For example, the controllable gas separation may be implemented by one or more shields as gas separation walls and one or more turbo molecular pumps, which separate the distinct process regions. Alternatively or additionally, a controlled gas inlet may be used for supplying the Ir-deposition with a defined Ar/O2 mixture.

A series #3 of working examples revealed enhanced properties of the substrates, when the plasma etching is supplied (e.g., only) with pure Oxygen, pure Argon or any mixtures thereof as working gas to compensate the strong non-linear relationship between the CeOx deposition and TSD or other process control variables. The gas composition may be adjusted for scaling to optimize the result of the protrusion formation process. For example, at a given TSD and power density, the result of the protrusion formation process strongly depends on the ratio between Argon and (e.g., molecular) Oxygen, supplied to the protrusion formation process. Controlling the ratio between Argon and (e.g., molecular) Oxygen may be implemented by at least two controlled gas inlets, one for Argon and one for (e.g., molecular) Oxygen, by which the protrusion formation process (e.g., CeO2 deposition) is supplied.

A series #4 of working examples revealed enhanced properties of the substrates, when the plasma etching is exposed to a working gas within a specific Ar:O2 mixtures window, of which a first window is in range of 0%Ar to 20%Ar and a second window is in the range from 40%Ar to 60%Ar.

A series #5 of working examples revealed enhanced properties of the substrates, when the plasma etching is combined with a sputter deposition, wherein one or more process control variables (e.g., gas mixture) may be adapted to achieve a given ratio between the etching rate of the masking material and the deposition rate of the masking material. Alternatively or additionally, this ratio may be a function of the target-substrate distance (TSD), e.g., for CeO2 as target material, and/or the chemical composition of the working gas (e.g., controlled by separate gas inlets for Oxygen and Argon) This allows for modifying the balance between substrate etching and deposition rate of the masking material.

A series #6 of working examples revealed enhanced properties of the substrates, when the 2-dimensional power density is within a range from 0.01 W cm⁻² to 100 W cm⁻² and the composition of the working gas supplied to the protrusion forming process is range from 0 % of the inert gas to 100 %.

A series #7 of working examples revealed enhanced properties of the substrates, when the partial pressure of (e.g., gaseous) Oxygen, to which the protrusion forming process is exposed, is range from 10⁻⁷ mbar to 10 mbar, e.g., more than 10⁻⁵ mbar and/or less than 10⁻² mbar.

series #8 of working examples revealed enhanced properties of the substrates, when the range for absolute electrical power, by which the protrusions are formed is range from about 5 W to 15 000 W. Various implementations may include a control device or at least software, which is configured to generate one or more control signals to modify the absolute electrical power.

A series #9 of working examples revealed enhanced properties of the substrates, when for plasma power per substrate width is range from 0.01 W cm⁻² to 1000 W cm⁻² (Watt per square centimeter). Various implementations may include a control device or at least software, which is configured to generate one or more control signals to modify the plasma power per substrate width.

A series #10 of working examples revealed enhanced properties of the substrates, when a process control variable representing the power density multiplied with the exposure time is in the range from 0.02 W min cm⁻² to 50 W min cm⁻². Various implementations may include a control device or at least software, which is configured to generate one or more control signals to modify a said process control variable.

A series #11 of working examples revealed enhanced properties of the substrates, when a process control variable representing the power density multiplied with the process length divided by the substrate velocity is in the range from 0.01 W cm⁻² / (cm s⁻¹) 100 W cm⁻² / (cm s⁻¹). Various implementations may include a control device or at least software, which is configured to generate one or more control signals to modify said process control variable.

A series #12 of working examples revealed enhanced properties of the substrates, when the substrate carrier includes a shadow masks (e.g., mounted to the carrier frame) for excluding non-active areas of the substrate from being processed. Alternatively or additionally, the carrier frame may include a substrate spanning mechanism and a cooling device. This allows substrate fixture, substrate cooling and substrate masking.

A series #13 of working examples revealed enhanced properties of the substrates, when under-stoichiometric (e.g., not fully oxidized) Cerium oxide is used as target material.

A series #14 of working examples revealed enhanced properties of the substrates, when the reflectivity of the result of the protrusion forming process and/or the result of the coating process is in the range from 1% to 20%, e.g., less than 10%. This facilitates optical inspection and/or a feedback control based on an optical sensor.

A series #15 of working examples revealed enhanced properties of the substrates, when the substrate is cooled during the protrusion forming process, e.g., by a cooling device. The cooling device may be integrated into a redirection roll or a substrate carrier (e.g., holding a tensioned substrate).

A series #16 of working examples revealed enhanced properties of the substrates, when the target-substrate-distance for the protrusion forming process is in the range from the 1 cm to 100 cm.

A series #17 of working examples revealed enhanced properties of the substrates, when the transport device includes two temperature control (e.g., cooling) rolls (e.g., drums), which facilitates dual side processing, e.g., including a dual side protrusion formation process and/or a dual side deformation process. For example, one side of the substrate may be coated by Ir as catalyst and the other side of the substrate may be coated with Pt as catalyst.

A series #18 of working examples revealed facilitated processing, when an abatement system is used for cleaning exhaust gas processing. This reduces the amount of reaction gases produced by the plasma etching including contaminations, which may contaminate the process area and/or become exhaust gases of the vacuum manufacturing system.

A series #19 of working examples revealed facilitated processing, when an interleaf is introduced between adjacent windings of the substrate to protect the surfaces from mechanical damage due to pressing. A first exemplarily implementation thereof introduces the interleaf between adjacent windings of the substrate direct after coating the fibrous protrusions with the catalyst (e.g., Platinum or Iridium). A second exemplarily implementation thereof introduces the interleaf directly after the protrusion formation process (e.g., CeOx coating) and is removed before the coating process, by which the fibrous protrusions are coated with the catalyst (e.g., Platinum or Iridium). The second exemplarily implementation may use an interleaf unwinder and/or an interleaf rewinder.

A series #20 of working examples revealed enhanced properties of the substrates, when the coating process is configured to coat the fibrous protrusions with a recombination catalyst. A first exemplarily implementation of the recombination catalyst may include an Iridium-based catalyst (Ir or Iridium oxide) and Pt embedded in the Iridium-based catalyst. A first exemplarily implementation of the recombination catalyst may include an Iridium-based catalyst (Ir or Iridium oxide) and Pt (e.g., a Pt-layer) disposed on the Iridium-based catalyst.

A series #21 of working examples is prepared by the following sequence: Phase 1 includes disposing a flexible substrate made from a polymer (e.g. Nafion, Aquivion, 3M ionomer) a vacuum chamber equipped with a magnetron deposition system as processing device. Phase 2 includes evacuating vacuum chamber and forming a working atmosphere therein consisting of Oxygen or a mixture of Oxygen with Argon (e.g., less Argon than Oxygen), e.g., controlled by mass flow controllers and vacuum gauges. The pressure of the working atmosphere may be in the range from 0.001 mbar to 0.1 mbar. Phase 3 includes supplying electrical power, e.g., by an AC (e.g., radio frequency or medium frequency) power source to a Cerium-including target of the magnetron to ignite a plasma, to which the target is exposed. According to various aspects the electrical power may alternating electrical power (also referred to as AC power), e.g., with a frequency from the range of mid frequency (MF) - in the range from around 20 kHz (Kilohertz) to around 300 kHz - or the range of radio frequency (RF) - in the range from around 1 MHz (Magahertz) to around 100 MHz (Megahertz). The distance between the target and the substrate may be in the range from 0.1 to 1 times the length of the target along its rotation axis. The plasma is configured to allow a subtractive-additive process (e.g., including subtractive plasma etching simultaneous to deposition of Cerium-including target material), to which the substrate is exposed. The subtractive-additive process forms the fibrous protrusions providing a fiber-like structure, thereby increasing the effective surface area of the substrate. As detailed above, the subtractive-additive process includes forming masking caps from the material of the target (also referred to as target material), between which the polymer of the substrate is removed by the subtractive process, thereby forming trenches in the substrate. The Cerium-including masking caps separate the underlying polymer of the substrate from the subtractive process, thereby forming the fibrous protrusions covered by the masking caps and separated from each other by the trenches. The deposition rate of the Cerium-including target material in the substrate may be in range of 0.01 nm/min to 100 nm/min, depending on the etching rate. Phase 4 includes forming a catalyst layer on the fibrous protrusions and on the masking caps. Forming a catalyst layer may be by one or more targets made from the catalyst. After forming the catalyst layer, the substrate is rolled under tension over a redirection roll or to a substrate roll, each of which applying pressure to the fibrous protrusions, which collapses the fibrous protrusions by 20% - 60% in height. This increases the electric efficiency of an electrochemical cell, which is formed using the substrate as PEM.

A series #22 of working examples is processed dual sided, by forming fibrous protrusions 104 on each of opposite sides of the substrate and forming a catalyst layer on the fibrous protrusions on each of the opposite sides of the substrate. The polymer of the substrate, from which the base layer and the fibrous protrusions are made, was Nafion NE 1035. These working examples are integrated as PEM in a water electrolyzer, e.g., into each electrochemical cell thereof. The electrochemical cell is assembled by disposing the dual side processed substrate, or a piece thereof, between two electrodes of the electrochemical cell and pressing the electrodes against each other, such that the fibrous protrusions of the substrate are deformed. This increases the electric efficiency of the electrochemical cell, which is formed using the substrate.

A series #23 of working examples was obtained from a tape-shaped substrate, which is processed according to one of the above series 1 to 22, wherein the processed tape-shaped substrate is cut into multiples sheets of a size compatible with the respective electrochemical cell.

A series #24 of working examples was obtained from multiple sheet-shaped substrates, of which each was processed according to one of the above series 1 to 22 by mounting the sheet-shaped substrate on a substrate carrier. For example, the sheet-shaped substrates may be obtained by cutting a tape-shaped substrate into multiple sheet-shaped substrates having a size compatible with the respective electrochemical cell.

A series #25 of working examples was obtained by exposing the substrate to an Oxygen atmosphere provided in first vacuum region and in a second vacuum region, in which the coating is formed. The coating includes a first material (e.g., providing masking caps, e.g., particles) formed in the first vacuum region and a second material (e.g., a catalyst) formed in the second vacuum region. Optionally, the atmospheric conditions in first vacuum region differ from the atmospheric conditions in the second vacuum region in one or more atmospheric parameters, e.g., in a temperature of the atmosphere and/or a total pressure of the atmosphere. This facilitates the fabrication, as the gas separation barrier may be omitted or at least reduced.

A series #26 of working examples was obtained by etching the substrate at 260 Watt and subsequently coating with 70 nm Iridium (e.g., 0.158 mg cm⁻² Ir).

A series #27 of working examples was obtained by etching (e.g., by erosive sputtering) the substrate, e.g., Nafion, at various temperatures and under pure oxygen atmosphere. The (e.g., absolute) temperature of the substrate (also referred to as substrate temperature) was controlled via a plate-shaped substrate holder, to which the substrate was attached. The low substrate temperature was obtained by starting the etching process, when the temperature of the substrate holder was set to room temperature. Elevated substrate temperatures were obtained by starting the etching process, when the substrate holder was pre-heated to a temperature above room temperature, e.g., to 40°C or more, e.g., to 60°C or more. It was observed that the etching rate (e.g., expressed in nanometer per hour) increased with increasing temperature of the substrate, thereby promoting the etching process. Said otherwise, the result of the etching process, e.g., the depth of the trenches, may be controlled by the substrate temperature during the etching process. Alternatively or additionally, the result of the etching process, e.g., the depth of the trenches, may be increased for a given exposure time by increasing the substrate temperature. This enables to increase the productivity of the protrusion forming process, as an increased transport velocity of the substrate may be compensated by an increased substrate temperature. For example, the substrate temperature may be set to 320 Kelvin or more, when starting or during the protrusion forming process, which is about 85% of the (e.g., absolute) glass transition temperature of Nation (e.g., about 385 Kelvin). For example, the substrate temperature may be set to 340 Kelvin or more, when starting or during the protrusion forming process, which is about 90% of the glass transition temperature of Nafio). For example, the substrate temperature may be set to 360 Kelvin or more, when starting or during the protrusion forming process, which is about 95% of the glass transition temperature of Nation. Generally, the substrate temperature may be set to a value below (e.g., at least 10 Kelvin below) the glass transition temperature of the substrate to avoid impairing the substrate integrity.

A series #28 of working examples was obtained by avoiding deformation of the fibrous protrusions, before they are coated with a catalyst layer. This enhances the result of the process as providing a higher number catalytic surface sections, which can be brought into contact with each other by the deformation process. As example of a roll-to-roll transport, the fibrous protrusions may be coated directly after they are formed, e.g., on the same transport roll or at least without being contacted by a transport roll. As alternative, the transport device may be configured such that the uncoated fibrous protrusions are not brought into contact with a transport roll before being coated by the catalyst. In case of a substrate carrier, avoiding pressure to the fibrous protrusions before they are coated may be facilitated.

A series #29 of working examples was obtained by vacuum manufacturing system, of which the transport device was not suitable to completely avoid contacting the fibrous protrusions before they are supplied to the coating process, e.g., coated with the catalyst layer. The transport device included a transport roll between the protrusion forming process and the coating process, by which the transport path was redirected, and which contacted the side of the substrate, on which the fibrous protrusions were formed. In this case, the pressure applied by the transport roll to the fibrous protrusions was minimized by reducing the substrate tension, such that the substrate was transported as loose as possible between the protrusion forming process and the coating process. As result, the deformation of the fibrous protrusions caused by the transport roll was drastically reduced, e.g., below a degree of deformation of the coated fibrous protrusions, e.g., provided by the deformation device. Generally said, the fibrous protrusions (which may be undeformed as result of the protrusion forming process, e.g., having a degree/fraction of zero deformation) may be deformed more by the deformation device than in the time between the protrusion forming process and the coating process.

A series #30 of working examples was obtained by vacuum manufacturing system, of which the transport device was not suitable to completely avoid a deformation of the fibrous protrusions before they are supplied to the coating process. The transport device was configured (e.g., by adjusting the distribution of the substrate tension) such that the transport roll, which contacted the catalytic surface caused a compression of the fibrous protrusions, which was more than the compression of the fibrous protrusions in the time between the protrusion forming process and the coating process.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

Various values for the temperature and relations thereof may be provided in Kelvin (then also referred to as absolute temperature).

## Claims

1. A substrate (100), comprising:
a base layer (102);
a plurality of fibrous protrusions (104) projecting from the base layer (102);
a coating (106, 116) at least partially covering the protrusions and providing a catalytic surface around the protrusions;
wherein the plurality of fibrous protrusions (104) comprises deformed protrusions, of which adjacent protrusions are separated from each other by sections (106a, 106b) of the catalytic surface, which contact each other.

2. The substrate (100) of claim 1,
- wherein the adjacent protrusions comprise a first protrusion, on which a first section of the coating (106, 116) is formed; wherein the adjacent protrusions comprise a second protrusion, on which a second section of the coating (106, 116) is formed; wherein a surface of the first section contacts a surface of the second section, and
- wherein the sections (106a, 106b) of the catalytic surface are disposed between the adjacent protrusions and delimit a trench between the adjacent protrusions.

3. The substrate (100) of one of claims 1 to 2, wherein
- each of the deformed protrusions is compressed and/or bent, such that the deformed protrusions are disposed partially on top of each other;
- wherein the catalyst surface extends into trenches, separating the adjacent protrusions from each other.

4. The substrate (100) of one of claims 1 to 3, wherein the deformed protrusions comprise a first group of deformed protrusions and a second group of deformed protrusions,
which differ from each other by one or more of the following:
a degree of deformation and/or compression; and/or
a volume of trenches between the deformed protrusions.

5. The substrate (100) of one of claims 1 to 4, wherein the coating (106, 116) comprises a first catalyst and a second catalyst different from the first catalyst, wherein the first catalyst is embedded in the second catalyst or wherein a layer made from the first catalyst contacts a layer made from the second catalyst.

6. The substrate (100) of one of claims 1 to 5, wherein
- the fibrous protrusions (104) are fibers,
- the coating (106, 116) comprises a plurality of protection caps, of which each cap is disposed between the catalytic surface and a tip of the protrusions; and
- wherein the base layer (102) and the protrusions are monolithically connected to each other and are made from a polymer.

7. An electrochemical cell comprising:
the substrate (100) of one of claims 1 to 6,
an anode and a cathode, between which the substrate (100) is disposed.

8. A method, comprising:
forming a coating (106, 116) on a plurality of fibrous protrusions (104) in a vacuum chamber, which project from a base layer (102), the coating (106, 116) at least partially covering the protrusions and providing a catalytic surface around the protrusions;
deforming adjacent protrusions of the plurality of fibrous protrusions (104), preferably by a mechanical deformation process, such that distant sections (106a, 106b) of the catalytic surface on the adjacent protrusions are brought into contact with each other.

9. The method of claim 8, wherein the mechanical deformation process is configured to apply mechanical pressure to the plurality of fibrous protrusions (104) and comprises:
- a redirection process, by which the substrate (100) is redirected, preferably via a transport roll or to a substrate roll, or
- an assembling process, by which an electrochemical cell comprising the substrate (100) is assembled.

10. The method of one of claims 8 to 9, wherein forming the coating further comprises supplying thermal energy to or depleting thermal energy from the substrate using a temperature control device such that an absolute temperature of the substrate is in the range of 70% to 95% of a glass transition temperature of the substrate.

11. The method of one of claims 8 to 10, further comprising: f
- orming the plurality of protrusions by a subtractive process, to which the substrate (100) is exposed, wherein a plasma of the subtractive process, by which the substrate (100) is at least partially etched, is formed in a working atmosphere composed of Oxygen;
- wherein, preferably, the plurality of fibrous protrusions (104) and the coating (106, 116) are formed in distinct vacuum regions, which differ from each other in an atmospheric chemical composition provided therein and which are separated from each other by a chamber wall.

12. A vacuum manufacturing system, comprising:
a vacuum chamber;
a transport device configured to transport a substrate (100) in the vacuum chamber, the substrate (100) comprising a base layer (102) and a plurality of fibrous protrusions (104), which project from the base layer (102);
a coating device disposed in the vacuum chamber and/ configured for forming a coating on a plurality of fibrous protrusions (104), the coating (106, 116) at least partially covering the protrusions and providing a catalytic surface around the protrusions;
a deformation device configured for deforming adjacent protrusions of the plurality of fibrous protrusions (104), such that sections (106a, 106b) of the catalytic surface, which are spatially separated from each other, are brought in contact with each other.

13. The vacuum manufacturing system of claim 12, wherein the transport device comprises a substrate carrier, wherein the substrate carrier comprises:
a frame configured to transfer tensile strain to the substrate (100) for spanning the substrate (100);
and a cooling device configured to deplete thermal energy from the substrate (100).

14. The vacuum manufacturing system of one of claims 12 to 13, being further be configured such the plurality of fibrous protrusions, which are supplied to the coating device, are undeformed.

15. The vacuum manufacturing system of one of claims 12 to 14, further comprising:
- a subtractive processing device, configured to perform a subtractive process for forming the plurality of protrusions; and
- preferably, an abatement system configured to deplete a gaseous result of the subtractive process.
